(19) Europäisches Patentamt
European Patent Office
Office européen des brevets

(11) EP 1 966 441 B1

(12) **FASCICULE DE BREVET EUROPEEN**

(45) Date de publication et mention de la délivrance du brevet:
**26.06.2013 Bulletin 2013/26**

(21) Numéro de dépôt: **06821052.5**

(22) Date de dépôt: **06.12.2006**

(51) Int Cl.:
***D21H 19/58*** *(2006.01)* ***C08F 220/06*** *(2006.01)*

(86) Numéro de dépôt international:
**PCT/IB2006/003575**

(87) Numéro de publication internationale:
**WO 2007/069037 (21.06.2007 Gazette 2007/25)**

(54) **PROCEDE DE FABRICATION DE SAUCES DE COUCHAGE A LA RETENTION D'EAU ET A LA VISCOSITE BROOKFIELDTM AMELIOREES METTANT EN OEUVRE UN POLYMERE PEIGNE AVEC AU MOINS UNE FONCTION GREFFEE OXYDE DE POLYALKYLENE**

VERFAHREN ZUR HERSTELLUNG VON STREICHMASSEN MIT ERHÖHTER WASSERRETENTION UND ERHÖHTER BROOKFIELD-VISKOSITÄT UNTER EINSATZ EINES KAMMPOLYMERS MIT MINDESTENS EINER AUFGEPFROPFTEN POLYALKYLENOXIDFUNKTION

PROCESS FOR PREPARING COATING SLIPS FEATURING ENHANCED WATER RETENTION AND ENHANCED BROOKFIELDTM VISCOSITY, USING A COMB POLYMER HAVING AT LEAST ONE GRAFTED POLYALKYLENE OXIDE FUNCTION

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK RS**

(30) Priorité: **16.12.2005 FR 0512797**

(43) Date de publication de la demande:
**10.09.2008 Bulletin 2008/37**

(73) Titulaire: **COATEX S.A.S.**
**69730 Genay (FR)**

(72) Inventeurs:
- **DUPONT, François**
  **F-69004 Lyon (FR)**
- **SUAU, Jean-Marc**
  **F-69480 Lucenay (FR)**

(56) Documents cités:
**FR-A- 2 846 978** **US-A- 4 780 500**
**US-A- 5 491 209** **US-A1- 2002 156 179**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 966 441 B1

## Description

La présente invention concerne le secteur technique des sauces de couchage entrant dans la fabrication des papiers et des cartons couchés à partir desdites sauces, et plus particulièrement le domaine des agents de rétention d'eau et des agents modificateurs de rhéologie entrant dans la composition desdites sauces.

Dans le cadre de la fabrication de la feuille de papier par couchage, on dépose sur la surface du papier support une composition aqueuse dénommée "sauce de couchage" qui contient notamment de l'eau, une ou plusieurs charges minérales, un ou plusieurs liants ainsi que divers additifs.

Après dépôt sur le support, la sauce de couchage possède une tendance naturelle à transférer dans le support, tout ou partie de l'eau et des substances hydrosolubles qu'elle contient. L'homme du métier, formulateur de telles sauces de couchage, a alors pour objectif de réduire au maximum cette migration de l'eau et des substances hydrosolubles, en vue d'éviter une évolution de la rhéologie de la sauce de couchage non utilisée et recyclée dans le procédé de couchage. On parle alors de phénomène de "rétention d'eau" qu'on cherche à améliorer, c'est-à-dire ici à augmenter. On utilise à ce titre des agents rétenteurs d'eau.

Il est bien connu d'utiliser comme agents rétenteurs d'eau des sauces de couchage, de l'amidon, de l'alcool polyvinylique (PVOH), des polymères à base de carboxyméthylcellulose (CMC), ainsi que des latex ou des émulsions de polymères hautement carboxylés, ou encore des polycarboxylates tels que des polyacrylates, ou enfin la classe particulière des polymères gonflables aux alcalis.

De tels produits, et leur utilisation comme agents permettant d'améliorer la rétention d'eau de sauces de couchage papetières, sont notamment décrits dans le document EP 0 509 878, comme objet de l'invention en ce qui concerne un mélange de polymères alcali gonflant et de polymères non alcali gonflant, et en tant qu'état de la polymères alcali gonflant et de polymères non alcali gonflant, et en tant qu'état de la technique pour les autres polymères mentionnés ci-dessus. La Demanderesse indique que ces agents, outre le fait d'avoir une action sur la rétention d'eau des sauces de couchage, se comportent également comme des agents épaississants ; à ce titre, l'homme du métier les désigne sous l'expression "agents épaississants rétenteurs d'eau".

Il existe cependant une deuxième exigence très importante pour le formulateur de sauces de couchage papetières et qui réside en l'obtention d'une viscosité Brookfield™ peu élevée pour ladite sauce et ce, afin d'obtenir un produit aisément manipulable par l'utilisateur final. Malheureusement pour l'homme du métier, aucun des composés précités ne permet d'améliorer constamment la rétention d'eau, tout en conservant une viscosité Brookfield™ de la sauce de couchage suffisamment basse. Ainsi, il est notamment bien connu que les produits de l'art antérieur précités, outre les propriétés intéressantes qu'ils confèrent aux sauces de couchage en terme de rétention d'eau, présentent une application limitée à cause des hautes viscosités Brookfield™ qu'ils développent dans ces mêmes sauces.

L'homme du métier est donc confronté au problème de l'optimisation de la rétention d'eau et de la viscosité Brookfield™ de la sauce de couchage, qui peut être résumé à travers la double problématique suivante d'obtention d'un couple rétention d'eau /viscosité Brookfield™ amélioré, c'est-à-dire à l'obtention :

- pour une viscosité Brookfield™ donnée, d'une rétention d'eau meilleure (plus élevée) qu'avec l'utilisation d'un agent épaississant rétenteur d'eau de l'art antérieur dans la sauce de couchage ;
- ou pour une rétention d'eau donnée, d'une viscosité Brookfield™ meilleure (plus faible) qu'avec un agent épaississant rétenteur d'eau de l'art antérieur dans la sauce de couchage.

A ce jour, l'homme du métier ne connaît, en vue de résoudre ce problème, que le document EP 1 203 121 qui décrit l'utilisation pour la fabrication de sauces de couchage papetières, de copolymères hydrosolubles en milieu neutre ou alcalin et

Ces copolymères permettent d'améliorer la rétention d'eau de la sauce de couchage et de réguler la viscosité Brookfield™, soit à une valeur élevée, soit à une valeur faible. Cette solution est toutefois limitante pour l'homme du métier, puisque ces polymères qui se présentent sous la forme d'émulsions acides font partie des polymères aux alcalis précités qui doivent être neutralisés pour remplir leur fonction d'épaississant et de rétenteur d'eau. Or, cette neutralisation constitue une étape supplémentaire dans la mise en oeuvre de la sauce de couchage : c'est donc une perte de temps mais aussi d'argent de par la mise en oeuvre d'agents de neutralisation.

Aussi, pour résoudre le problème de l'optimisation de la rétention d'eau et de la viscosité Brookfield™ de la sauce de couchage, résumé à travers la double problématique suivante d'obtention d'un couple rétention d'eau / viscosité Brookfield™ amélioré, c'est-à-dire à l'obtention:

- pour une viscosité Brookfield™ donnée, d'une rétention d'eau meilleure (plus élevée) qu'avec l'utilisation d'un agent épaississant rétenteur d'eau de l'art antérieur dans la sauce de couchage,
- ou pour une rétention d'eau donnée, d'une viscosité Brookfield™ meilleure (plus faible) qu'avec un agent épaississant rétenteur d'eau de l'art antérieur dans la sauce de couchage,

la Demanderesse a mis au point une nouvelle utilisation, dans un procédé de fabrication de sauces de couchage; contenant :

(a) au moins une matière minérale,
(b) au moins un liant,
(c) de l'eau,

d'un agent qui est introduit dans la composition précitée, et consistant en au moins un polymère peigne, obtenu par greffage d'au moins une fonction oxyde de polyalkylène sur la chaîne polymérique, ladite chaîne résultant de la polymérisation d'au moins un monomère insaturé éthylénique.

Ledit procédé conduit de manière tout à fait surprenante à l'obtention de sauces de couchage ayant un couple rétention d'eau / viscosité Brookfield™ nettement amélioré (cette amélioration étant explicitée plus haut) par rapport à des sauces de couchage contenant à la place du polymère peigne précité un agent épaississant rétenteur d'eau de l'art antérieur.

Enfin, la Demanderesse tient à indiquer un certain nombre de documents qui décrivent l'utilisation de polymères de type peigne, obtenus par greffage d'au moins une fonction oxyde de polyalkylène sur la chaîne polymérique- Ces utilisations, comme la Demanderesse va le détailler par la suite, ont lieu dans des applications souvent éloignées de celle du domaine papetier, et de manière systématique pour résoudre des problèmes techniques différents de celui objet de la présente Demande.

Ainsi, la Demanderesse peut citer le document EP 0 610 534 qui enseigne la préparation de polymères obtenus par copolymérisation d'un monomère isocyanate et de monomères aprotiques, puis par fonctionnalisation au moyen d'amines ou d'éthers monoalkylés de polyalkylènes glycol. De tels agents sont particulièrement efficaces pour le broyage de pigments organiques, ce qui est un domaine complètement différent de celui objet de la présente Demande.

De même, elle indique que le document WO 00 / 077 058 décrit des polymères à base d'un dérivé insaturé d'un acide mono ou dicarboxyliquc, d'un dérivé insaturé de polyalkylène glycol, d'un composé polysiloxane insaturé ou d'un ester insaturé. Ces copolymères sont utilisés comme agents dispersants dans les suspensions aqueuses de charges minérales, notamment dans le secteur des ciments, domaine très éloigné du secteur papetier.

Elle connaît également le document WO 2004 / 041 882 qui décrit un copolymère ionique, hydrosoluble, et disposant d'une fonction greffée alkoxy ou hydroxy

Elle connaît également le document WO 2004 / 041 882 qui décrit un copolymère ionique, hydrosoluble, et disposant d'une fonction greffée alkoxy ou hydroxy polyalkylène glycol, dont le rôle est de disperser et / ou d'aider au broyage des pigments et / ou des charges minérales. Ledit copolymère permet d'obtenir des suspensions aqueuses de cesdites matières affinées, de concentration en matière sèche pouvant être élevée, de viscosité Brookfield™™ faible et stable dans le temps ayant la propriété de présenter une surface pigmentaire dont la charge ionique déterminée par titration est faible : il s'agit donc d'un problème technique très différent de celui que vise à résoudre la présente invention.

Elle connaît également le document WO 2004 / 041 883 qui enseigne l'utilisation d'un copolymère hydrosoluble et de préférence faiblement ionique et hydrosoluble, disposant d'au moins une fonction alkoxy ou hydroxy polyalkylène glycol greffée sur au moins un monomère insaturé éthylénique, comme agent améliorant la brillance du produit final tel qu'une feuille de papier ou une matière plastique. Or, l'amélioration de la brillance n'est en rien l'objet de la présente invention.

Enfin, la Demanderesse connaît aussi le document WO 2004 / 044 022 qui décrit l'utilisation d'un copolymère hydrosoluble disposant d'au moins une fonction alkoxy ou hydroxy polyalkylène glycol greffée sur au moins un monomère insaturé éthylénique, comme agent améliorant l'activation de l'azurage optique dans les domaines du papier, du textile, de la détergence et de la peinture. Dans l'exemple 10 de ce document, il est indiqué que 2 polymères à base d'acide acrylique, d'acide méthacrylique et de méthacrylate de méthoxypolyléthylène glycol de poids moléculaire 2000, améliorent la rétention d'eau d'une sauce de couchage papetière : cette amélioration est relative à une référence constituée d'une sauce de couchage ne contenant aucun agent épaississant rétenteur d'eau de l'art antérieur. Or, dans le cadre de la présente Demande, on se place dans le cas d'une référence contenant déjà un tel agent épaississant rétenteur d'eau de l'art antérieur, ce qui constitue un problème technique différent. Rien ne suggérait à l'homme du métier dans le document WO 2004 / 044 022 que des polymères de type peigne selon la présente Demande, conduiraient à des valeurs de rétention d'eau supérieures à celles obtenues avec des ne suggérait la possibilité de diminuer la viscosité Brookfield™ de la dite sauce par ajout d'un polymère de type peigne selon la présente Demande, cette diminution étant mesurée par rapport à la même sauce contenant un agent épaississant rétenteur d'eau de l'art antérieur.

Aussi, un premier objet de l'invention est donc une utilisation dudit agent selon l'invention dans un procédé de fabrication de sauces de couchage, lesdites sauces contenant :

(a) au moins une matière minérale,
(b) au moins un liant,

(c) de l'eau,

caractérisée en ce qu'est introduit dans la composition précitée, comme agent permettant d'augmenter la rétention d'eau et de diminuer la viscosité Brookfield™ de la composition, au moins un polymère peigne, obtenu par greffage d'au moins une fonction oxyde de polyalkylène sur la chaîne polymérique, ladite chaîne résultant de la polymérisation d'au moins un monomère insaturé éthylénique.

L'utilisation dudit agent selon l'invention est aussi caractérisée en ce que ledit polymère est introduit :

1. avec la matière minérale, sous forme de poudre sèche, et / ou de dispersion aqueuse et / ou de suspension aqueuse résultant des étapes de :

- broyage et / ou dispersion en milieu humide et préférentiellement aqueux de la matière minérale en présence dudit polymère, et éventuellement en présence d'au moins un agent de broyage en voie humide et / ou d'au moins un agent dispersant, conduisant à l'obtention d'une dispersion et / ou d'une suspension aqueuse de la matière minérale ;
- et dans le cas de la poudre sèche uniquement, du séchage de la dispersion et / ou de la suspension aqueuse de la matière minérale, puis éventuellement traitement et classification de la poudre obtenue ;

2. et / ou avec la matière minérale, sous forme de dispersion aqueuse et / ou de suspension aqueuse, résultant des étapes de :

- broyage à sec de la charge minérale, éventuellement en présence d'au moins un agent de broyage à sec, puis éventuellement traitement et classification de la poudre obtenue ;

- mise en dispersion et / ou en suspension aqueuse de la poudre obtenue, avec introduction dudit polymère et éventuellement en présence d'un agent dispersant ;

3. et / ou avec la matière minérale sous forme de poudre sèche, et / ou de dispersion aqueuse et / ou de suspension aqueuse résultant des étapes de :

- introduction dudit polymère dans une dispersion et / ou dans une suspension aqueuse contenant la matière minérale ;

- et dans le cas de la poudre sèche uniquement, du séchage de la dispersion et / ou de la suspension aqueuse de la matière minérale, puis éventuellement traitement et classification de la poudre obtenue ;

4. et / ou sous forme de poudre sèche mélangée avec les autres constituants a), b) et c) ;

5. et / ou sous forme de solution aqueuse mélangée avec les autres constituants a), b) et c) ;

L'utilisation dudit agent selon l'invention est aussi caractérisée en ce que la sauce de couchage :

(a) contient de 3 parts à 20 parts, préférentiellement de 5 parts à 15 parts en poids sec de liant, pour 100 parts en poids sec de matière minérale,

(b) contient de 0,1 parts à 2 parts, préférentiellement de 0,1 à 1,5 parts en poids sec de polymère peigne, pour 100 parts en poids sec de matière minérale,

(c) contient de l'eau dans une quantité en poids comprise entre 20 % et 80 %, par rapport au poids total de la sauce de couchage.

La Demanderesse indique que l'homme du métier peut alors ajouter d'autres additifs entrant dans la composition habituelle d'une sauce de couchage, tels que des biocides, des agents antimousse, des azurants optiques et des supports d'azurant optique, sans pour autant que cette liste soit exhaustive.

A ce titre, l'utilisation dudit agent dans le e procédé de fabrication de la sauce de couchage est aussi caractérisée en ce qu'on peut mettre éventuellement aussi en oeuvre au moins un agent rétenteur d'eau et / ou épaississant autre que le polymère peigne utilisé.

L'utilisation dudit agent selon l'invention est aussi caractérisée en ce que la matière minérale est choisie parmi

le carbonate de calcium naturel ou synthétique, les dolomies, le kaolin, le talc, le gypse, l'oxyde de titane, le blanc satin ou encore le trihydroxyde d'aluminium, le mica, le noir de carbone et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane.

La matière minérale est préférentiellement choisie parmi le carbonate de calcium naturel ou synthétique, le kaolin, le talc et les mélanges de ces charges.

La matière minérale est très préférentiellement une charge minérale qui est un carbonate de calcium naturel ou synthétique ou leurs mélanges. La matière minérale est extrêmement préférentiellement un carbonate de calcium naturel choisi parmi le marbre, la calcite, la craie ou leurs mélanges.

L'utilisation dudit agent selon l'invention est aussi caractérisée en ce que le liant est choisi parmi les liants hydrosolubles et notamment l'amidon, ou parmi les liants polymères latex synthétiques tels que les styrène-acrylique et les styrène-butadiène ou leurs mélanges, ou les mélanges de ces liants.

L'utilisation selon l'invention est aussi caractérisée en ce que les polymères peigne ont un poids moléculaire noté $M_w$ compris entre 100 000 g/mole et 10 000 000 g/mole, préférentiellement entre 1 000 000 g/mole et 7 000 000 g/mole.

La Demanderesse indique que dans la présente Demande, le poids moléculaire des polymères mis en oeuvre est déterminé selon la méthode GPC (Chromatographie en Phase Gel ou Gel Permeability Chromatography) mettant en oeuvre un appareil de chromatographie liquide de marque Waters™ doté de deux détecteurs dont l'un combinant la diffusion dynamique de la lumière à la viscosimétrie mesurée par un viscosimètre Viscotek™ et l'autre étant un détecteur de concentration réfractométrique de marque Waters™.

Cet appareillage de chromatographie liquide est doté de colonnes d'exclusion stérique convenablement choisies par l'homme du métier afin de séparer les différents poids moléculaires des polymères étudiés.

La phase liquide d'élution est une phase aqueuse.

De manière détaillée, on prélève 1 ml de la solution de polymérisation qui est mise sur une coupelle, et ensuite évaporée à température ambiante sous un vide inférieur à 1 mm de mercure. Le soluté est dilué à 0,9 % dans l'éluant de la GPC, et l'ensemble est ensuite injecté dans appareil de GPC. L'éluant de la GPC est une solution de $NaHCO_3$ : 0,08 mol/l, $NaNO_3$ : 0,1 mol/l, triéthanolamine : 0,02 mol/l, $NaN_3$ 0,03 % massique. La colonne de GPC contient une pompe isocratique (Waters 515) dont le débit est réglé à 0,5 ml/min, un four contenant une précolonne de type "Guard Column Ultrahydrogel Waters ™" une colonne linéaire de type "Ultrahydrogel Waters ™" de 30 cm de long et 7,8 mm de diamètre intérieur et un détecteur réfractométrique de type RI Waters™ 410. Le four est porté à la température de 60°C, et le réfractomètre est porté à la température de 50°C. L'appareil de GPC est étalonné par une série de 5 étalons de polyacrylate de sodium fourni par Polymer Standard Service, et d'indice de polymolécularité compris entre 1,4 et 1,7, ainsi qu'avec un polyacrylate de sodium d'indice de polymolécularité égal à 2,4 et de poids moléculaire égal à 5 600 g/mole.

L'utilisation dudit agent selon l'invention est aussi caractérisée en ce que les polymères peigne contiennent au moins un monomère de formule (I) :

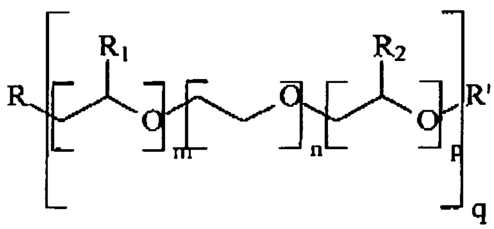

(I)

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$,
- $R_1$ représente l'hydrogéne ou le radical méthyle ou éthyle,
- $R_2$ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne,

α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,

- R' représente un radical hydrocarboné ayant 1 à 4 atomes de carbone,

ou du mélange de plusieurs monomères de formule (I).

L'utilisation dudit agent selon l'invention est aussi caractérisée en ce les polymères peigne se composent :

a) d'au moins un monomère anionique et à fonction carboxylique ou dicarboxylique ou phosphorique ou phosphonique ou sulfonique ou leur mélange,

b) d'au moins un monomère non ionique, le monomère non ionique étant constitué d'au moins un monomère de formule (I) :

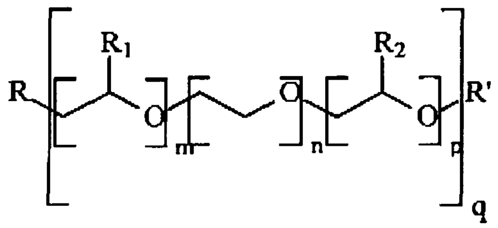

(I)

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et préférentiellement tel que $15 \leq (m+n+p)q \leq 120$
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente un radical hydrocarboné ayant 1 à 4 atomes de carbone,

ou du mélange de plusieurs monomères de formule (I),

c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) ethyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré ou organosililé, ou du mélange de plusieurs de ces monomères,

d) éventuellement d'au moins un monomère possédant au moins deux insaturations éthyléniques appelé dans la suite de la Demande monomère réticulant.

L'utilisation dudit agent selon l'invention est aussi caractérisée en ce que ledit polymère peigne est constitué :

a) d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique

Le procédé selon l'invention est aussi caractérisé en ce que ledit polymère peigne est constitué :

a) d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges,

b) d'au moins un monomère à insaturation éthylénique non ionique de formule (I) :

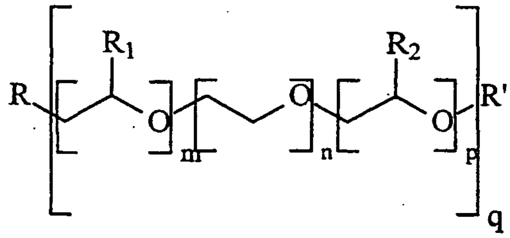

(I)

dans laquelle :

- m et p représentent un nombre de motifs d'oxyde d'alkylène inférieur ou égal à 150, vinylphtalique ainsi qu'au groupe des insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente un radical hydrocarboné ayant 1 à 4 atomes de carbone,

ou du mélange de plusieurs monomères de formule (I),

c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère

organofluoré, ou encore d'au moins un monomère organosililé choisi de manière préférentielle parmi les molécules de formules (IIa) ou (IIb) d) avec formule (IIa)

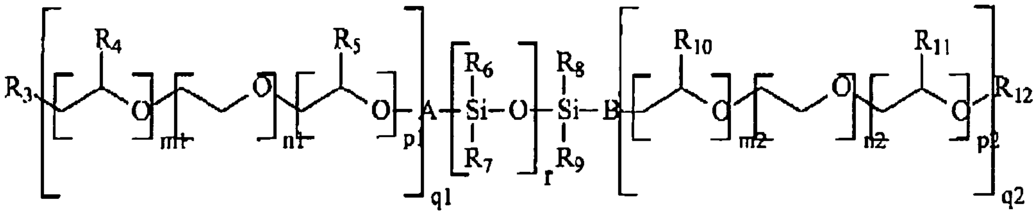

chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré, ou encore d'au moins un monomère organosililé choisi de manière préférentielle parmi les molécules de formules (IIa) ou (IIb) avec formule (IIa)

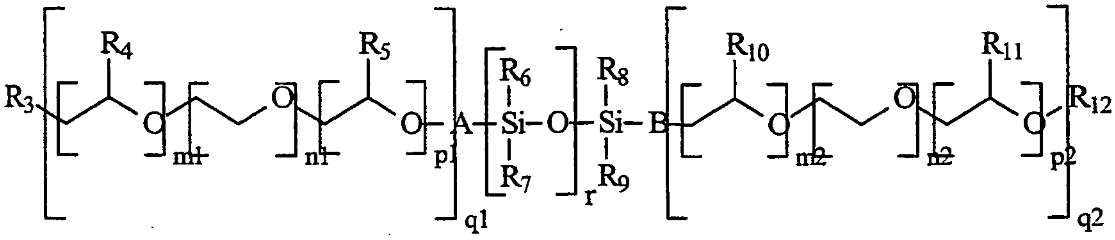

dans laquelle :

- $m_1$, $p_1$, $m_2$ et $p_2$ représentent un nombre de motifs d'oxyde d'alkylène inférieur ou égal à 150,
- $n_1$ et $n_2$ représentent un nombre de motifs d'oxyde d'éthylène inférieur ou égal à 150,
- $q_1$ et $q_2$ représentent un nombre entier au moins égal à 1 et tel que $0 \leq (m_1+n_1+p_1)q_1 \leq 150$ et $0 \leq (m_2+n_2+p_2)q_2 \leq 150$,
- r représente un nombre tel que $1 \leq r \leq 200$,
- $R_3$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11}$, représentent l'hydrogène ou le radical méthyle ou éthyle,
- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,
- A et B sont des groupements éventuellement présents, qui représentent alors un radical hydrocarboné ayant 1 à 4 atomes de carbone,

avec formule (IIb)

$$R - A - Si\ (OB)_3$$

dans laquelle :

- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,

- A est un groupement éventuellement présent, qui représente alors un radical hydrocarboné ayant 1 à 4 atomes de carbone,
- B représente un radical hydrocarboné ayant 1 à 4 atomes de carbone,

ou du mélange de plusieurs de ces monomères,

d) éventuellement d'au moins un monomère réticulant choisi d'une manière non limitative dans le groupe constitué par le diméthacrylate d'éthylène glycol, le triacrylate de triméthylolpropane, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres, ou choisi parmi les molécules de formule (III) :

- r' représente un nombre tel que $1 \leq r' \leq 200$,
- $R_{13}$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,
- ou du mélange de plusieurs de ces monomères,

L'utilisation dudit agent selon l'invention est aussi caractérisée en ce que ledit polymère peigne est constitué, exprimé en poids :

a) de 2 % à 95 % et encore plus particulièrement de 5 % à 90 % d'au moins un monomère anionique à insaturation éthylénique et à fonction monocarboxylique choisi parmi les monomères à insaturation éthylénique et à fonction monocarboxylique tels que l'acide acrylique ou méthacrylique, ou encore les hémiesters de diacides tels que les monoesters en $C_1$ à $C_4$ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges,

b) de 2 % à 95 % et encore plus particulièrement de 5 % à 90 % d'au moins un monomère à insaturation éthylénique non ionique de formule (I) :

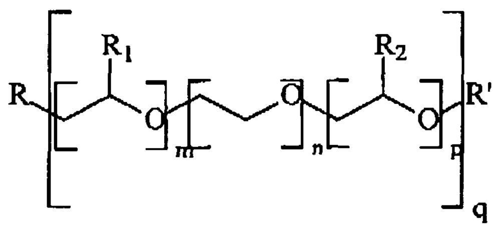

(I)

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et préférentiellement tel que $15 \leq (m+n+p)q \leq 120$,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente un radical hydrocarboné ayant 1 à 4 atomes de carbone,

ou du mélange de plusieurs monomères de formule (I),

c) de 0 % à 50 % d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de (2-(acryloyloxy) éthyl] triméthyl ammonium, le chlorure de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'un monomère organofluoré, ou encore d'un monomère organosililé choisi de manière préférentielle parmi les molécules de formules (IIa) ou (IIb) :

avec formule (IIa)

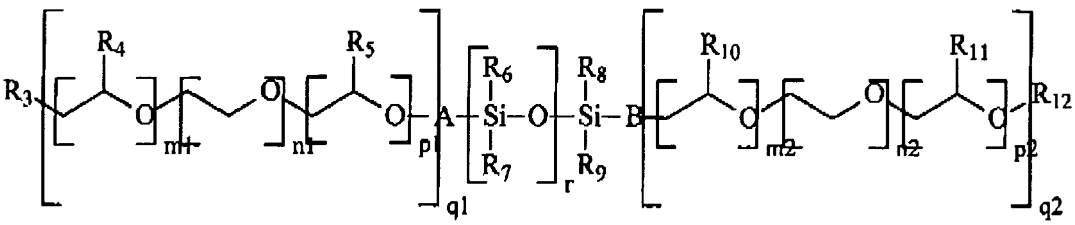

dans laquelle:

l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'un monomère organofluoré, ou encore d'un monomère organosililé choisi de manière préférentielle parmi les molécules de formules (IIa) ou (IIb) :

avec formule (IIa)

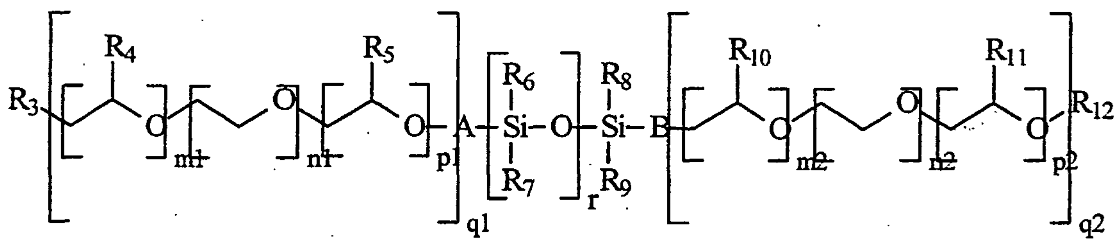

dans laquelle :

- $m_1$, $p_1$, $m_2$ et $p_2$ représentent un nombre de motifs d'oxyde d'alkylène inférieur ou égal à 150,
- $n_1$ et $n_2$ représentent un nombre de motifs d'oxyde d'éthylène inférieur ou égal à 150,
- $q_1$ et $q_2$ représentent un nombre entier au moins égal à 1 et tel que $0 \leq (m_1+n_1+p_1)q_1 \leq 150$ et $0 \leq (m_2+n_2+p_2) q_2 \leq 150$,
- r représente un nombre tel que $1 \leq r \leq 200$,
- $R_3$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11,}$ représentent l'hydrogène ou le radical méthyle ou éthyle,
- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,
- A et B sont des groupements éventuellement présents, qui représentent alors un radical hydrocarboné ayant 1 à 4 atomes de carbone,

avec formule (IIb)

$$R - A - Si\ (OB)_3$$

dans laquelle :

- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone,

ou du mélange de plusieurs de ces monomères,

d) de 0 % à 3 % d'au moins un monomère réticulant choisi d'une manière non limitative dans le groupe constitué par le diméthacrylate d'éthylène glycol, le triacrylate de triméthylolpropane, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres, ou choisi parmi les molécules de formule (III) :

e)

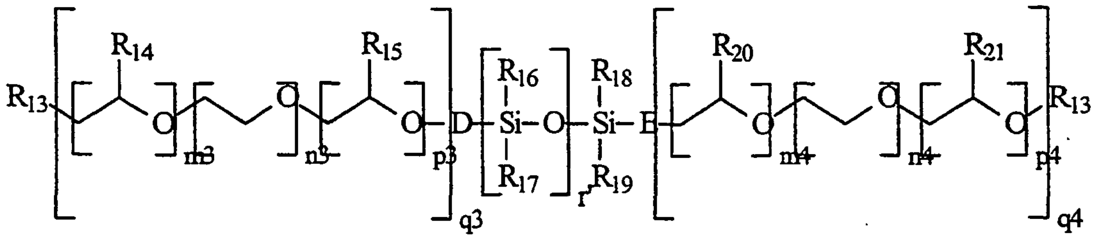

(III)

dans laquelle :

- $m_3$, $p_3$, $m_4$ et $p_4$ représentent un nombre de motifs d'oxyde d'alkylène inférieur ou égal à 150,
- $n_3$ et $n_4$ représentent un nombre de motifs d'oxyde d'éthylène inférieur ou égal à 150,
- $q_3$ et $q_4$ représentent un nombre entier au moins égal à 1 et tel que $0 \leq (m_3+n_3+p_3)q_3 \leq 150$ et $0 \leq (m_4+n_4+p_4) q_4 \leq 150$,
- r' représente un nombre tel que $1 \leq r' \leq 200$,
- $R_{13}$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,

lithium, l'ammonium ou les amines primaires, secondaires ou tertiaires aliphatiques et/ou cycliques telles que par exemple la stéarylamine, les éthanolamines (mono-, di-, triéthanolamine), la mono et diéthylamine, la cyclohexylamine, la méthylcyclohexylamine, l'amino méthyl propanol, la morpholine, ou bien encore pour la fonction polyvalente ceux choisis dans le groupe constitué par les cations divalents alcalino-terreux, en particulier le magnésium et le calcium, ou encore le zinc, de même que par les cations trivalents, dont en particulier l'aluminium, ou encore par certains cations de valence plus élevée.

Chaque agent de neutralisation intervient alors selon des taux de neutralisation propres à chaque fonction de valence.

Selon une autre variante, le polymère issu de la réaction de polymérisation peut éventuellement avant ou après la réaction de neutralisation totale ou partielle, être traité et séparé en plusieurs phases, selon des procédés statiques ou dynamiques connus de l'homme du métier, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges.

L'une des phases correspond alors au polymère utilisé selon l'invention.
Selon une autre variante, ledit polymère peut être séché.

Un autre objet de l'invention réside dans les sauces de couchage obtenues par le procédé selon l'invention.
Le dernier objet de l'invention est l'utilisation des sauces de couchage selon l'invention pour le couchage du papier et du carton
La portée et l'intérêt de l'invention seront mieux perçus grâce aux exemples suivants qui ne sauraient être limitatifs.

## EXEMPLES

### Exemple 1

Cet exemple illustre <u>l'utilisation selon l'invention, dans un</u> e procédé de fabrication de sauces de couchage, <u>d'un agent qui est introduit directement dans ladite</u> sauce, sous forme d'une solution aqueuse, <u>ledit agent consistant en</u> un polymère peigne, obtenu par greffage d'au moins une fonction oxyde de polyalkylène sur la chaîne polymérique, ladite chaîne résultant de la polymérisation d'au moins un monomère insaturé éthylénique.

<u>Fabrication des sauces de couchage</u>

Pour chacun des essais n° 1 à 7, on réalise une sauce de couchage par mélange de :

- 100 parts en poids sec d'une suspension aqueuse de carbonate de calcium qui est du marbre de Norvège et qui est commercialisé par la société OMYA™ sous le nom de Hydrocarb™ 90, et dont la teneur en poids sec de carbonate de calcium est égale à 78 % du poids total de la suspension ;
- 10 parts en poids sec de latex styrène-butadiène commercialisé par la société DOW™ CHEMICALS sous le nom de DL 966, pour 100 parts en poids sec de carbonate de calcium ;
- une certaine quantité du polymère à tester (selon l'invention ou selon l'art antérieur), cette quantité étant exprimée en parts en poids sec de polymère, pour 100 parts en poids sec de carbonate de calcium.

On réalise ainsi une sauce de couchage dont on fixe la teneur en poids sec à 69 % du poids total de ladite sauce.

Mesure de la viscosité Brookfield™

Pour chacune des sauces ainsi formulées, on réalise tout d'abord, à 25 °C, la mesure de la viscosité Brookfield™ à 100 tours par minute notée $\mu_{100}$ selon la méthode bien connue de l'homme du métier.

Mesure de la rétention d'eau

On détermine ensuite pour chaque sauce une valeur de rétention d'eau, selon la méthode suivante.

- 100 parts en poids sec d'une suspension aqueuse de carbonate de calcium qui est du marbre de Norvège et qui est commercialisé par la société OMYA™ sous le nom de Hydrocarb™ 90, et dont la teneur en poids sec de carbonate de calcium est égale à 78 % du poids total de la suspension ;
- 10 parts en poids sec de latex styrène-butadiène commercialisé par la société DOW™ CHEMICALS sous le nom de DL 966, pour 100 parts en poids sec de carbonate de calcium ;
- une certaine quantité du polymère à tester (selon l'invention ou selon l'art antérieur), cette quantité étant exprimée en parts en poids sec de polymère, pour 100 parts en poids sec de carbonate de calcium.

On réalise ainsi une sauce de couchage dont on fixe la teneur en poids sec à 69 % du poids total de ladite sauce.

Mesure de la viscosité Brookfield™

Pour chacune des sauces ainsi formulées, on réalise tout d'abord, à 25 °C, la mesure de la viscosité Brookfield™ à 100 tours par minute notée $\mu_{100}$ selon la méthode bien connue de l'homme du métier.

Mesure de la rétention d'eau

On détermine ensuite pour chaque sauce une valeur de rétention d'eau, selon la méthode suivante.
La rétention d'eau est déterminée grâce à un appareil du type AAGWR commercialisé par la société GRADEK™.
Cet appareil est constitué d'une chambre de mesure dans laquelle on dispose un papier test dénommé "Test Blotter Paper", recouvert par un toile plastique perforée dénommée "Test Filter PCTE", le papier et la toile étant commercialisés par la société GRADEK™.
On introduit ensuite dans la chambre 10 ml de la sauce de couchage à tester.

- 0,2 pour l'essai 1-a
- 0,45 pour l'essai 1-b
- 0,7 pour l'essai 1-c

Essai n°2

Cet essai illustre l'art antérieur et met en oeuvre un copolymère de l'acide méthacrylique et de l'acrylate d'éthyle, dans une proportion égale à, exprimée en parts en poids sec de copolymère pour 100 parts en poids sec de carbonate de calcium :

- 0,2 pour l'essai 2-a
- 0,3 pour l'essai 2-b
- 0,55 pour l'essai 2-c

Essai n° 3

Cet essai illustre l'invention et met en oeuvre l'utilisation d'un polymère constitué de, exprimé en pourcentage en poids des monomères :

- 5,9 % d'acide acrylique
- 1,6 % d'acide méthacrylique
- 92,5 % de méthacrylate de méthoxy polyéthylène glycol de poids moléculaire égal à 5 000 g/mole

ledit polymère ayant un poids moléculaire égal à 2 560 000 g/mole.
Ce polymère est mis en oeuvre dans une proportion égale à, exprimée en parts en poids sec de polymère pour

100 parts en poids sec de carbonate de calcium :

- 0,3 pour l'essai 3-a
- 0,8 pour l'essai 3-b
- 1,2 pour l'essai 3-c
- 3,0 pour l'essai 3-d

Essai n° 4

Cet essai illustre l'invention et met en oeuvre l'utilisation d'un polymère constitué de, exprimé en pourcentage en poids des monomères :

- 5,9 % d'acide acrylique
- 1,6 % d'acide méthacrylique
- 92,5 % de méthacrylate de méthoxy polyéthylène glycol de poids moléculaire égal à 5 000 g/mole

ledit polymère ayant un poids moléculaire tel que déterminé par GPC égal à 950 000 g/mole.
Ce polymère est mis en oeuvre dans une proportion égale à, exprimée en parts en poids sec de polymère pour 100 parts en poids sec de carbonate de calcium :

- 0,3 pour l'essai 4-a
- 0,8 pour l'essai 4-b
- 1,2 pour l'essai 4-c

Essai n° 5

Cet essai illustre l'invention et met en oeuvre l'utilisation d'un polymère constitué de, exprimé en pourcentage en poids des monomères :

- 5,9 % d'acide acrylique
- 1,6 % d'acide méthacrylique
- 92,5 % de méthacrylate de méthoxy polyéthylène glycol de poids moléculaire égal à 5 000 g/mole

ledit polymère ayant un poids moléculaire égal à 4 350 000 g/mole.

Ce polymère est mis en oeuvre dans une proportion égale à, exprimée en parts en poids sec de polymère pour 100 parts en poids sec de carbonate de calcium :

- 0,3 pour l'essai 5-a
- 0,8 pour l'essai 5-b
- 1,2 pour l'essai 5-c
- 92,5 % de méthacrylate de méthoxy polyéthylène glycol de poids moléculaire égal à 5 000 g/mole

ledit polymère ayant un poids moléculaire tel que déterminé par GPC égal à 950 000 g/mole.
Ce polymère est mis en oeuvre dans une proportion égale à, exprimée en parts en poids sec de polymère pour 100 parts en poids sec de carbonate de calcium :

- 0,3 pour l'essai 4-a
- 0,8 pour l'essai 4-b
- 1,2 pour l'essai 4-c

Essai n° 5

Cet essai illustre l'invention et met en oeuvre un polymère constitué de, exprimé en pourcentage en poids des monomères :

- 5,9 % d'acide acrylique
- 1,6 % d'acide méthacrylique
- 92,5 % de méthacrylate de méthoxy polyéthylène glycol de poids moléculaire égal à 5 000 g/mole

ledit polymère ayant un poids moléculaire égal à 4 350 000 g/mole.

Ce polymère est mis en oeuvre dans une proportion égale à, exprimée en parts en poids sec de polymère pour 100 parts en poids sec de carbonate de calcium :

- 0,3 pour l'essai 5-a
- 0,8 pour l'essai 5-b
- 1,2 pour l'essai 5-c

Pour chacun des essais n° 1 à 5, les valeurs de la viscosité Brookfield™ mesurée à 25°C et à 100 tours par minute ($\mu_{100}$) ainsi que de l'augmentation relative de la rétention d'eau ($R_{\%}$) sont données dans le tableau 1.

- ou pour une rétention d'eau donnée, une viscosité Brookfield™ meilleure (plus faible) qu'avec un agent épaississant rétenteur d'eau de l'art antérieur dans la sauce de couchage.

**Exemple 2**

Cet exemple illustre l'utilisation selon l'invention, dans un procédé de fabrication de sauces de couchage, d'un agent qui est introduit directement dans lesdites sauces, sous forme d'un solution aqueuse; ledit agent consistant en un polymère peigne, obtenu par greffage d'au moins une fonction oxyde de polyalkylène sur la chaîne polymérique, ladite chaîne résultant de la polymérisation d'au moins un monomère insaturé éthylénique.

Fabrication des sauces de couchage

Pour chacun des essais n° 6 à 14, on réalise une sauce de couchage par mélange de :

- 100 parts en poids sec d'une suspension aqueuse de carbonate de calcium qui est du marbre de Norvège et qui est commercialisé par la société OMYA™ sous le nom de Hydrocarb™ 90, et dont la teneur en poids sec de carbonate de calcium est égale à 78 % du poids total de la suspension ;
- 11 parts en poids sec de latex styrène-butadiène commercialisé par la société DOW™ CHEMICALS sous le nom de DL 966, pour 100 parts en poids sec de carbonate de calcium ;
- 0,4 parts en poids sec d'alcool polyvinylique pour 100 parts en poids sec de carbonate de calcium ;
- 1 parts en poids sec d'azurant optique commercialisé par la société BAYER™ sous le nom de Blancophor™ P, pour 100 parts en poids sec de carbonate de calcium ;
- le polymère à tester (selon l'invention ou selon l'art antérieur), dans 2 quantités égales à 0,4 et 0,6 parts en poids sec dudit polymère, pour 100 parts en poids sec de carbonate de calcium.

On réalise ainsi une sauce de couchage dont on fixe la teneur en poids sec à 68 % du poids total de ladite sauce.

Mesure de la viscosité Brookfield™

Pour chacune des sauces ainsi formulées, on réalise tout d'abord, à 25 °C, la mesure de la viscosité Brookfield™ à 100 tours par minute notée $\mu_{100}$ selon la méthode bien connue de l'homme du métier.

Mesure de la rétention d'eau

On détermine ensuite pour chaque sauce une valeur de rétention d'eau, selon la méthode telle que décrite dans l'exemple 1.

Essai n° 6

Cet essai illustre l'art antérieur et met en oeuvre une carboxyméthyl cellulose commercialisée par la société METSA SERLA™ sous le nom de Finnfix™ 10.

Essai n° 7

Cet essai illustre l'invention et met en oeuvre l'utilisation d'un polymère constitué de, exprimé en pourcentage en poids des monomères :

- 5,9 % d'acide acrylique
- 1,6 % d'acide méthacrylique
- 92,5 % de méthacrylate de méthoxy polyéthylène glycol de poids moléculaire égal à 5 000 g/mole

ledit polymère ayant un poids moléculaire égal à 2 560 000 g/mole.

Essai n° 8

Cet essai illustre l'invention et met en oeuvre- l'utilisation d'un polymère constitué de, exprimé en pourcentage en poids des monomères :

- 6,0 % d'acide acrylique
- 94 % de méthacrylate de méthoxy polyéthylène glycol de poids moléculaire égal à 750 g/mole

ledit polymère ayant un poids moléculaire égal à 1 574 000 g/mole.

Essai n° 9

Cet essai illustre l'invention et met en oeuvre l'utilisation d'un polymère constitué de, exprimé en pourcentage en poids des monomères :

- 6 % d'acide acrylique
- 94 % de méthacrylate de méthoxy polyéthylène glycol de poids moléculaire égal à 2 000 g/mole

ledit polymère ayant un poids moléculaire égal à 2 085 000 g/mole.

Essai n° 10

Cet essai illustre l'invention et met en oeuvre l'utilisation d'un polymère constitué de, exprimé en pourcentage en poids des monomères :

- 30 % d'acide acrylique
- 70 % de méthacrylate de méthoxy polyéthylène glycol de poids moléculaire égal à 5 000 g/mole

ledit polymère ayant un poids moléculaire égal à 60 000 g/mole.

Essai n° 11

Cet essai illustre l'invention et met en oeuvre l'utilisation d'un un polymère constitué de, exprimé en pourcentage en poids des monomères :

- 40 % d'acide acrylique
- 60 % de méthacrylate de méthoxy polyéthylène glycol de poids moléculaire égal à 5 000 g/mole

ledit polymère ayant un poids moléculaire égal à 67 000 g/mole.

Essai n° 12

Cet essai illustre l'invention et met en oeuvre l'utilisation d'un polymère constitué de, exprimé en pourcentage en poids des monomères :

- 5,0 % d'acide acrylique
- 2,6 % d'acide acrylamido-méthyl-propane-sulfonique
- 92,4 % de méthacrylate de méthoxy polyéthylène glycol de poids moléculaire égal à 5 000 g/mole

ledit polymère ayant un poids moléculaire égal à 460 000 g/mole.

Essai n° 13

Cet essai illustre l'invention et met en oeuvre l'utilisation d'un polymère constitué de, exprimé en pourcentage en poids des monomères :

- 15,6 % de phosphate de méthacrylate d'éthylène glycol
- 84,4 % de méthacrylate de méthoxy polyéthylène glycol de poids moléculaire égal à 5 000 g/mole

ledit polymère ayant un poids moléculaire égal à 2 560 000 g/mole.

Essai n° 14

Cet essai illustre l'invention et met en oeuvre l'utilisation d'un polymère constitué de, exprimé en pourcentage en poids des monomères :

- 6,0 % d'acide acrylique
- 94,0 % de méthacrylate de méthoxy polyéthylène glycol de poids moléculaire égal à 3 000 g/mole

ledit polymère ayant un poids moléculaire égal à 2 560 000 g/mole.

Comme pour l'exemple 1, on représente, pour une quantité x (ici égale à 0, 0,4 et 0,6 parts en poids sec dudit polymère pour 100 parts de carbonate de calcium) de polymère mise en oeuvre :

$$R_{\%} = (R_x - R_0) / R_0 * 100 \text{ en fonction de la viscosité Brookfield } \mu_{100}.$$

Cette représentation est en figure 2.

L'examen de cette figure démontre clairement que l'utilisation des polymères peigne selon l'invention permet d'améliorer le couple rétention d'eau / viscosité Brookfield™, c'est-à-dire d'obtenir :

- pour une viscosité Brookfield™ donnée, une rétention d'eau meilleure (plus élevée) qu'avec l'utilisation d'un agent épaississant rétenteur d'eau de l'art antérieur dans la sauce de couchage,
- ou pour une rétention d'eau donnée, une viscosité Brookfield™ meilleure (plus faible) qu'avec un agent épaississant rétenteur d'eau de l'art antérieur dans la sauce de couchage.

**Exemple 3**

Cet exemple illustre l'utilisation selon l'invention, dans un procédé de fabrication de sauces de couchage, d'un agent qui est introduit dans ladite sauce ledit agent consistant en un polymère peigne, obtenu par greffage d'au moins une fonction oxyde de polyalkylène sur la chaîne polymérique, ladite chaîne résultant de la polymérisation d'au moins un monomère insaturé éthylénique.
Ce polymère est introduit sous forme d'une dispersion aqueuse de carbonate de calcium, ledit polymère ayant été mis en oeuvre pour disperser ledit carbonate de calcium dans l'eau.

Fabrication des sauces de couchage

Pour chacun des essais n° 15 à 17, on réalise une sauce de couchage par mélange de :

- 100 parts en poids sec d'une suspension aqueuse de carbonate de calcium qui est un marbre de Norvège, dont la teneur en poids sec de carbonate de calcium est égale à 78 % du poids total de la dispersion, et contenant un polymère ayant servi à broyer ou à disperser ledit carbonate de calcium, ledit polymère étant un polymère de l'art antérieur ou le polymère selon l'invention ;
- 11 parts en poids sec de latex styrène-butadiène commercialisé par la société DOW™ CHEMICALS sous le nom de DL 966, pour 100 parts en poids sec de carbonate de calcium ;
- pour une viscosité Brookfield™ donnée, une rétention d'eau meilleure (plus élevée) qu'avec l'utilisation d'un agent épaississant rétenteur d'eau de l'art antérieur dans la sauce de couchage,
- ou pour une rétention d'eau donnée, une viscosité Brookfield™ meilleure (plus faible) qu'avec un agent épaississant rétenteur d'eau de l'art antérieur dans la sauce de couchage.

**Exemple 3**

Cet exemple illustre le procédé de fabrication de sauces de couchage selon l'invention, sauce dans laquelle on introduit, un polymère peigne, obtenu par greffage d'au moins une fonction oxyde de polyalkylène sur la chaîne polymérique, ladite chaîne résultant de la polymérisation d'au moins un monomère insaturé éthylénique. Ce polymère est introduit sous forme d'une dispersion aqueuse de carbonate de calcium, ledit polymère ayant été mis en oeuvre pour disperser ledit carbonate de calcium dans l'eau.

Fabrication des sauces de couchage

Pour chacun des essais n° 15 à 17, on réalise une sauce de couchage par mélange de :

- 100 parts en poids sec d'une suspension aqueuse de carbonate de calcium qui est un marbre de Norvège, dont la teneur en poids sec de carbonate de calcium est égale à 78 % du poids total de la dispersion, et contenant un polymère ayant servi à broyer ou à disperser ledit carbonate de calcium, ledit polymère étant un polymère de l'art antérieur ou le polymère selon l'invention ;
- 11 parts en poids sec de latex styrène-butadiène commercialisé par la société DOW™ CHEMICALS sous le nom de DL 966, pour 100 parts en poids sec de carbonate de calcium ;
- 0,6 parts en poids sec d'une carboxyméthyl cellulose commercialisée par la société METSA SERLA™ sous le nom de Finnfix™ 10 ;
- 0,3 parts en poids sec d'alcool polyvinylique, pour 100 parts en poids sec de carbonate de calcium ;
- 0,5 parts en poids sec d'azurant optique commercialisé par la société BAYER sous le nom de Blancophor™ P, pour 100 parts en poids sec de carbonate de calcium ;

On réalise ainsi une sauce de couchage dont on fixe la teneur en poids sec à 67 % du poids total de ladite sauce.

Mesure de la viscosité Brookfield™

Pour chacune des sauces ainsi formulées, on réalise tout d'abord, à 25 °C, la mesure de la viscosité Brookfield™ à 100 tours par minute notée $\mu_{100}$ selon la méthode bien connue de l'homme du métier.

Mesure de la rétention d'eau

On détermine ensuite pour chaque sauce une valeur de rétention d'eau, selon la méthode telle que décrite dans l'exemple 1.

Essai n° 15

Cet essai illustre l'art antérieur et met en oeuvre 2 % en poids sec d'un homopolymère de l'acide acrylique par rapport au poids sec de carbonate de calcium, pour disperser dans l'eau ledit carbonate de calcium.

Essai n° 16

Cet essai illustre l'invention et met en oeuvre 2 % en poids sec d'un polymère (par rapport au poids sec de carbonate de calcium) constitué de, exprimé en pourcentage en poids des monomères :

- 5,9 % d'acide acrylique
- 1,6 % d'acide méthacrylique
- 92,5 % de méthacrylate de méthoxy polyéthylène glycol de poids moléculaire égal à 5 000 g/mole

ledit polymère ayant un poids moléculaire égal à 2 560 000 g/mole.

Ce polymère a servi à disperser dans l'eau le carbonate de calcium.

Essai n° 17

Cet essai illustre l'invention et met en oeuvre 2 % en poids sec d'un polymère (par rapport au poids sec de carbonate de calcium) constitué de, exprimé en pourcentage en poids des monomères :

- 5,9 % d'acide acrylique
- 1,6 % d'acide méthacrylique
- 92,5 % de méthacrylate de méthoxy polyéthylène glycol de poids moléculaire égal à 5 000 g/mole

ledit polymère ayant un poids moléculaire égal à 2 560 000 g/mole.

Ce polymère a servi à broyer dans l'eau le carbonate de calcium.

Les valeurs de la viscosité Brookfield mesurée à 100 tours / minute et de la rétention d'eau telles qu'indiquées auparavant, ont été indiquées dans le tableau 2, en ce qui concerne les sauces de couchage correspondant aux essais n° 15 à 17.

**Tableau 3**

| Essai n° | Art Antérieur / Invention | Viscosité Brookfield 100 tours / minute (mPa.s) | Rétention d'eau (g/m2) |
|---|---|---|---|
| 15 | Art Antérieur | 2800 | 138 |
| 16 | Invention | 1400 | 113 |
| 17 | Invention | 1150 | 105 |

La lecture du tableau 3 démontre que, les polymères mis en oeuvre selon l'invention, permettent de diminuer la viscosité Brookfield des sauces de couchage, tout en améliorant leur rétention d'eau.

## Revendications

1. Utilisation, dans un procédé de fabrication de sauces de couchage, lesdites sauces contenant :

   (a) au moins une matière minérale,
   (b) au moins un liant,
   (c) de l'eau,
   comme agent :

   - ayant la fonction, pour une viscosité Brookfield™ donnée, d'augmenter la rétention de la sauce par rapport à un agent épaississant rétenteur d'eau de l'art antérieur,
   - ayant la fonction, pour une rétention d'eau donnée, de diminuer la viscosité Brookfield™ de la sauce par rapport à un agent épaississant rétenteur d'eau de l'art antérieur,

   d'un agent consistant en au moins un polymère peigne, obtenu par greffage d'au moins une fonction oxyde de polyalkylène sur la chaîne polymérique, ladite chaîne résultant de la polymérisation d'au moins un monomère insaturé éthylénique,
   et caractérisé(s) en ce que :

   ledit ou lesdits polymère(s) peigne a/ont un poids moléculaire noté $M_w$ compris entre 1 000 000 g/mole et 7 000 000 g/mole, <u>déterminé tel que décrit dans la description</u>
   et en ce qu'il(s) se compose(nt) :

   a) d'au moins un monomère anionique et à fonction carboxylique ou dicarboxylique ou phosphorique ou phosphonique ou sulfonique ou leur mélange,
   b) d'au moins un monomère non ionique, le monomère non ionique étant constitué d'au moins un monomère de formule (I) :

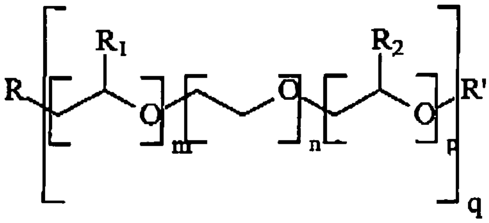

(I)

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et préférentiellement tel que $15 \leq (m+n+p)q \leq 120$
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente un radical hydrocarboné ayant 1 à 4 atomes de carbone,

ou du mélange de plusieurs monomères de formule (I),

(c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] trimethyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré ou organosililé, ou du mélange de plusieurs de ces monomères,

(d) éventuellement d'au moins un monomère possédant au moins deux insaturations éthyléniques,

**2.** Utilisation selon la revendication 1, **caractérisée en ce que** ledit polymère est introduit :

1. avec la matière minérale, sous forme de poudre sèche, et / ou de dispersion aqueuse et / ou de suspension aqueuse résultant des étapes de :

- broyage et / ou dispersion en milieu humide et préférentiellement aqueux de la matière minérale en présence dudit polymère, et éventuellement en présence d'au moins un agent de broyage en voie humide et / ou d'au moins un agent dispersant, conduisant à l'obtention d'une dispersion et / ou d'une suspension aqueuse de la matière minérale ;
- et dans le cas de la poudre sèche uniquement, du séchage de la dispersion et / ou de la suspension aqueuse de la matière minérale, puis éventuellement traitement et classification de la poudre obtenue ;

2. et / ou avec la matière minérale, sous forme de dispersion aqueuse et / ou de suspension aqueuse, résultant des étapes de :

- broyage à sec de la charge minérale, éventuellement en présence d'au moins un agent de broyage à sec, puis éventuellement traitement et classification de la poudre obtenue ;

- mise en dispersion et / ou en suspension aqueuse de la poudre obtenue, avec introduction dudit polymère et éventuellement en présence d'un agent dispersant ;

3. et / ou avec la matière minérale sous forme de poudre sèche, et / ou de dispersion aqueuse et / ou de suspension aqueuse résultant des étapes de :

- introduction dudit polymère dans une dispersion et / ou dans une suspension aqueuse contenant la matière minérale ;
- et dans le cas de la poudre sèche uniquement, du séchage de la dispersion et / ou de la suspension aqueuse de la matière minérale, puis éventuellement traitement et classification de la poudre obtenue ;

4. et / ou sous forme de poudre sèche mélangée avec les autres constituants a), b) et c) ;
5. et / ou sous forme de solution aqueuse mélangée avec les autres constituants a), b) et c) ;

**3.** Utilisation selon l'une des revendications 1 ou 2, **caractérisée en ce que** la sauce de couchage contient, en pourcentage en poids de chaque constituant par rapport au poids total de la sauce de couchage :

(a) contient de 3 parts à 20 parts, préférentiellement de 5 parts à 15 parts en poids sec de liant, pour 100 parts en poids sec de matière minérale,
(b) contient de 0,1 parts à 2 parts, préférentiellement de 0,1 à 1,5 parts en poids sec de polymère peigne, pour 100 parts en poids sec de matière minérale,
(c) contient de l'eau dans une quantité en poids comprise entre 20 % et 80 %, par rapport au poids total de la sauce de couchage.

**4.** Utilisation selon l'une des revendications 1 à 3, **caractérisée en ce que** l'on met aussi en oeuvre au moins un agent rétenteur d'eau et / ou épaississant autre que le polymère peigne utilisé.

**5.** Utilisation selon l'une des revendications 1 à 4, **caractérisée en ce que** la matière minérale est choisie parmi le carbonate de calcium naturel ou synthétique, les dolomies, le kaolin, le talc, le gypse, l'oxyde de titane, le blanc satin ou encore le trihydroxyde d'aluminium, le mica, le noir de carbone et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, préférentiellement choisie parmi le carbonate de calcium naturel ou synthétique, le kaolin, le talc et les mélanges de ces charges, très préférentiellement choisie parmi le carbonate de calcium naturel ou synthétique ou leurs mélanges, et encore plus préférentiellement choisie parmi le marbre, la calcite, la craie ou leurs mélanges.

**6.** Utilisation selon l'une des revendications 1 à 5, **caractérisée en ce que** le liant est choisi parmi les liants hydrosolubles et notamment l'amidon, ou parmi les liants polymères latex synthétiques tels que les styrène-acrylique et les styrène-butadiène ou leurs mélanges, ou les mélanges de ces liants.

**7.** Utilisation selon l'une des revendications 1 à 6, caractérisée en ce les polymères peigne se composent :

(a) d'au moins un monomère anionique et à fonction carboxylique ou dicarboxylique ou phosphorique ou phosphonique ou sulfonique ou leur mélange,
(b) d'au moins un monomère non ionique, le monomère non ionique étant constitué d'au moins un monomère de formule (I) :

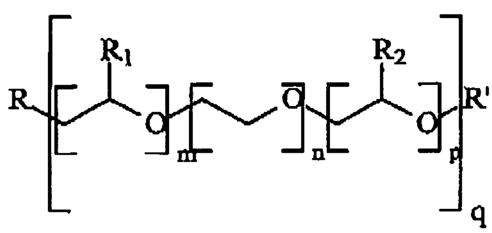

(I)

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et préférentiellement tel que $15 \leq (m+n+p)q \leq 120$
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente un radical hydrocarboné ayant 1 à 4 atomes de carbone,

ou du mélange de plusieurs monomères de formule (I),
(c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] trimethyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré ou organosililé, ou du mélange de plusieurs de ces monomères,
(d) éventuellement d'au moins un monomère possédant au moins deux insaturations éthyléniques,

**8.** Utilisation selon l'une des revendications 1 à 7, **caractérisée en ce que** ledit polymère peigne est constitué :

(a)d'au moins un monomère anionique à insaturation éthylénique et à fonction monocarboxylique choisi parmi les monomères à insaturation éthylénique et à fonction monocarboxylique tels que l'acide acrylique ou méthacrylique au encore les hémiesters de diacides tels que les monoesters en $C_1$ à $C_4$ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges,
(b) d'au moins un monomère à insaturahon éthylénique non ionique de formule (I) :

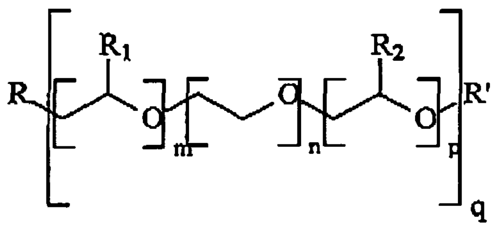

(I)

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et préférentiellement tel que $15 \leq (m+n+p)q \leq 120$,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, $\alpha$-$\alpha$' diméthyl-isopropényl-benzyluréthanne, allyluréthanne, de même qu'au groupe des éthers allyliques ou vinylique substitués ou non, ou encore au groupe des amides ou des imides éthyléniquement insaturées,
- R' représente un radical hydrocarboné ayant 1 à 4 atomes de carbone,

ou du mélange de plusieurs monomères de formule (I),
(c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamide) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré, ou encore d'au moins un monomère organosililé choisi de manière préférentielle parmi les molécules de formules (IIa) ou (IIb) :

avec formule (IIa)

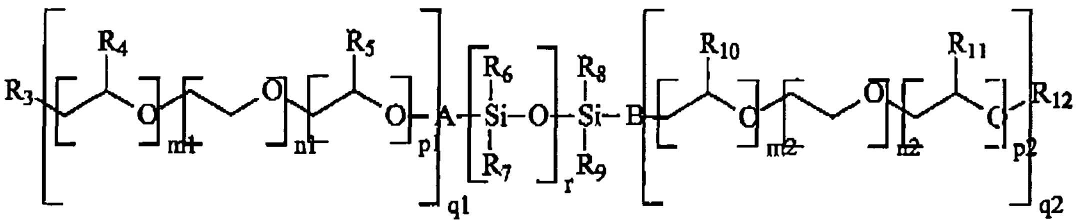

dans laquelle :

- $m_1$, $p_1$, $m_2$ et $p_2$ représentent un nombre de motifs d'oxyde d'alkylène: inférieur ou égal à 150,
- $n_1$ et $n_2$ représentent un nombre de motifs d'oxyde d'éthylène inférieur ou égal à 150,
- $q_1$ et $q_2$ représentent un nombre entier au moins égal à 1 et tel que $0 \leq (m_1+n_1+p_1)q_1 \leq 150$ et $0 \leq (m_2+n_2+p_2)q_2 \leq 150$,
- r représente un nombre tel que $1 \leq r \leq 200$,
- $R_3$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11}$, représentent l'hydrogène ou le radical méthyle ou éthyle,
- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,
- A et B sont des groupements éventuellement présents, qui représentent alors un radical hydrocarboné ayant 1 à 4 atomes de carbone,

avec formule (IIb)

R-A-Si $(OB)_3$

dans laquelle :

- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone,

ou du mélange de plusieurs de ces monomères,

(d) éventuellement d'au moins un monomère réticulant choisi dans le groupe constitué par le diméthacrylate d'éthylène glycol, le triacrylate de triméthylolpropane, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres, ou choisi parmi les molécules de formule (III) :

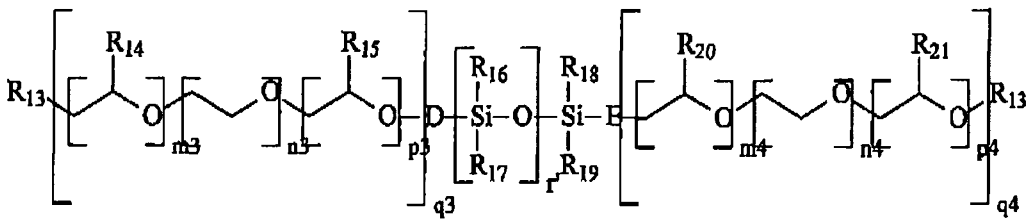

(III)

dans laquelle:

- $m_3$, $p_3$, $m_4$ et $p_4$ représentent un nombre de motifs d'oxyde d'alkylène, inférieur ou égal à 150,
- $n_3$ et $n_4$ représentent un nombre de motifs d'oxyde d'éthylène infiérieur ou égal à 150,
- $q_3$ et $q_4$ représentent un nombre entier au moins égal à 1 et tel que $0 \leq (m_3+n_3+p_3)q_3 \leq 150$ et $0 \leq (m_4+n_4+p_4)q_4 \leq 150$,
- r' représente un nombre tel que $1 \leq r' \leq 200$,
- $R_{13}$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que les actyluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,

ou du mélange de plusieurs de ces monomères,

**9.** Utilisation selon l'une des revendications 1 à 8, **caractérisée en ce que** ledit polymère peigne est constitué, exprimé

en poids :

(a)de 2 % à 95 % et encore plus particulièrement de 5 % à 90 % d'au moins un monomère anionique à insaturation éthylénique et à fonction monocarboxylique choisi parmi les monomères à insaturation éthylénique et à fonction monocarboxylique tels que l'acide acrylique ou méthacrylique, ou encore les hémiesters de diacides tels que les monoesters en $C_1$ à $C_4$ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphorique tels que l'acide vinyl phosphonique, ou leurs mélanges,

(b)de 2 % à 95 % et encore plus particulièrement de 5 % à 90 % d'au moins un monomère à insaturation éthylénique non ionique de formule (I) :

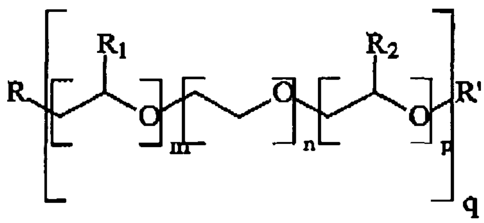

(I)

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et préférentiellement tel que $15 \leq (m+n+p)q \leq 120$,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant préférentiellement au groupe des vinyliques ainsi qu'an groupe des esters acrylique, méthacrylique, maléique, itaconique, crotonique, vinylphtalique ainsi qu'au groupe des insaturés uréthannes tels que les acrylutéthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente un radical hydrocarboné ayant 1 à 4 atomes de carbone,

ou du mélange de plusieurs monomères de formule (I),

(c) de 0 % à 50 % d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'un monomère organofluoré, ou encore d'un monomère organosililé choisi de manière préférentielle parmi les molécules de formules (IIa) ou (IIb) :

avec formule (IIa)

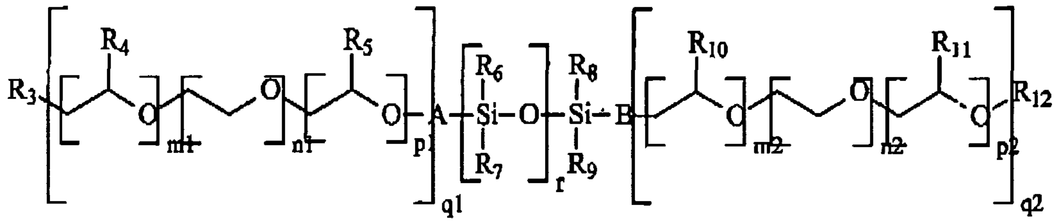

dans laquelle :

- $m_1$, $p_1$, $m_2$ et $p_2$ représentent un nombre de motifs d'oxyde d'alkylène inférieur ou égal à 150,
- $n_1$ et $n_2$ représentent un nombre de motifs d'oxyde d'éthylène inférieur ou égal à 150,
- $q_1$ et $q_2$ représentent un nombre entier au moins égal à 1 et tel que $0 \leq (m_1+n_1+p_1)q_1 \leq 150$ et $0 \leq (m_2+n_1+p_2)q_2 \leq 150$,
- r représente un nombre tel que $1 \leq r \leq 200$,
- $R_3$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insatharées,
- $R_4$, $R_5$, $R_{10}$ et $R_{11}$, représentent l'hydrogène ou le radical méthyle ou éthyle,
- $R_6$, $R_1$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,
- A et B sont des groupements éventuellement présents, qui représentent alors un radical hydrocarboné ayant 1 à 4 atomes de carbone,

avec formule (IIb)

$$R\text{-}A\text{- } Si\ (OB)_3$$

dans laquelle:

- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone,

ou du mélange de plusieurs de ces monomères,

(d)de 0 % à 3 % d'au moins un monomère réticulant choisi dans le groupe constitué par le diméthacrylate d'éthylène glycol, le triacrylate de triméthylolpropane, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres, ou choisi parmi les molécules de formule (III) :

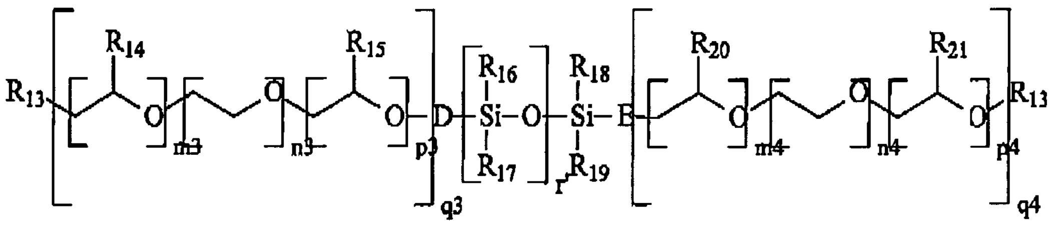

(III)

dans laquelle :

- $m_3$, $p_3$, $m_4$ et $p_4$ représentent un nombre de motifs d'oxyde d'alkylène inférieur ou égal à 150,
- $n_3$ et $n_4$ représentent un nombre de motifs d'oxyde d'éthylène inférieur ou égal à 150,
- $q_3$ et $q_4$ représentent un nombre entier au moins égal à 1 et tel que $0 \leq (m_3+n_3+p_3)q_3 \leq 150$ et $0 \leq (m_4+n_4+p_4)q_4 \leq 150$,
- r' représente un nombre tel que $1 \leq r' \leq 200$,
- $R_{13}$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1, à 20 atomes de carbone, ou leur mélange,
- D et E sont des groupements éventuellement présents, qui représentent alors un radical hydrocarboné ayant 1 à 4 atomes de carbone,

ou du mélange de plusieurs de ces monomères,

le total des proportions des constituants a), b), c), et d) étant égal à 100 %.

## Patentansprüche

**1.** Verwendung, in einem Verfahren zur Herstellung von Streichmassen, wobei die Massen Folgendes enthalten :

(a) mindestens einen Mineralstoff,
(b) mindestens ein Bindemittel,
(c) Wasser,

eines Mittels, das aus mindestens einem Kammpolymer besteht, welches durch Pfropfung mindestens einer funktionellen Polyalkylenoxidgruppe auf die Polymerkette erhalten wird, wobei diese Kette aus der Polymerisation mindestens eines ethylenisch ungesättigten Monomers hervorgeht,
und das oder die Kammpolymer(e) **dadurch gekennzeichnet** ist/sind, dass
es/sie ein als $M_w$ bezeichnetes Molekulargewicht hat/haben, das im Bereich von 1.000.000 g/mol bis 7.000.000 g/mol liegt und gemäß den Angaben in der Beschreibung bestimmt wird
und dadurch, dass es/sie sich aus Folgendem zusammensetzt/zusammensetzen:

a) mindestens einem anionischen Monomer mit funktioneller Carbonsäure-oder Dicarbonsäure- oder Phosphorsäure- oder Phosphonsäure-- oder Sulfonsäuregruppe oder deren Mischung,
b) mindestens einem nichtionischen Monomer, wobei das nichtionische Monomer aus mindestens einem Monomer der Formel (I) besteht:

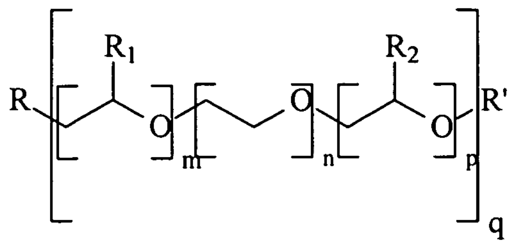

(I)

wobei:

- m und p für eine Anzahl an Alkylenoxidbausteinen von höchstens 150 stehen,
- n für eine Anzahl an Ethylenoxidbausteinen von höchstens 150 steht,
- q für eine ganze Zahl steht, die mindestens gleich 1 und derart ist, dass $5 \leq (m+n+p)q \leq 150$, und vorzugsweise derart ist, dass $15 \leq (m+n+p)q \leq 120$
- $R_1$ für Wasserstoff oder einen Methyl- oder Ethylrest steht,
- $R_2$ für Wasserstoff oder einen Methyl- oder Ethylrest steht,
- R für einen Rest steht, der eine polymerisierbare ungesättigte funktionelle Gruppe enthält, wobei er vorzugsweise der Gruppe der Vinylverbindungen sowie der Gruppe der Acrylsäure-, Methacrylsäure-, Maleinsäure-, Itaconsäure-, Crotonsäure-, Vinylphthalsäureester oder auch der Gruppe der ungesättigten Urethanverbindungen, wie etwa Acrylurethan, Methacrylurethan, α-α'-Dimethylisopropenylbenzylurethan, Allylurethan, wie auch der Gruppe der substituierten oder unsubstituierten Allyl- oder Vinylether oder aber der Gruppe der ethylenisch ungesättigten Amide oder Imide angehört,
- R' für einen Kohlenwasserstoffrest mit 1 bis 4 Kohlenstoffatomen steht,

oder aus der Mischung mehrerer Monomere der Formel (I),
(c) möglicherweise mindestens einem acrylamid- oder methacrylamidartigen Monomer oder deren Derivaten wie etwa N-[3-(Dimethylamino)propyl]acrylamid oder N-[3-(Dimethylamino) propyl]methacrylamid und deren Mischungen, oder auch mindestens einem wasserunlöslichen Monomer wie etwa den Alkylacrylaten oder -methacrylaten, den ungesättigten Estern wie etwa N-[2-(Dimethylamino)ethyl]methacrylat oder N-[2-(Dimethylamino)ethyl]acrylat, den Vinylverbindungen wie etwa Vinylacetat, Vinylpyrrolidon, Styrol, alpha-Methylstyrol und deren Derivaten, oder mindestens einem kationischen Monomer oder quartärem Ammonium wie etwa dem Chlorid oder dem Sulfat von [2-(Methacryloyloxy)ethyl]trimethylammonium, dem Chlorid oder dem Sulfat von [2-(Acryloyloxy)ethyl]trimethylammonium, dem Chlorid oder Sulfat von [3-(Acrylamido)propyl]trimethylammonium, dem Chlorid oder Sulfat von Dimethyldiallylammonium, dem Chlorid oder Sulfat von [3-(Methacrylamido) propyl]trimethylammonium, oder auch mindestens einem organofluorartigen oder organosilylartigen Monomer, oder der Mischung mehrerer dieser Monomere,
(d) möglicherweise mindestens einem Monomer, das mindestens zweifach ethylenisch ungesättigt ist,

als Mittel,

- das die Aufgabe hat, bei einer gegebenen Brookfield™-Viskosität das Bindevermögen der Masse gegenüber einem verdickend-wasserbindend wirkenden Mittel des Standes der Technik zu erhöhen,
- das die Aufgabe hat, bei einem gegebenen Wasserbindevermögen die Brookfield™-Viskosität der Masse gegenüber einem verdickend-wasserbindend wirkenden Mittel des Standes der Technik zu verringern.

**2.** Verwendung nach Anspruch 1, **dadurch gekennzeichnet, dass** das Polymer folgendermaßen zugesetzt wird:

1. mit dem Mineralstoff, in Form eines trockenen Pulvers, und/oder einer wässrigen Dispersion und/oder einer wässrigen Suspension, das/die sich aus den folgenden Schritten ergibt:

- Zerkleinern und/oder Dispergieren des Mineralstoffs in feuchtem und zwar vorzugsweise wässrigem Milieu in Gegenwart des Polymers, und möglicherweise in Gegenwart mindestens eines Mahlhilfsmittels für Nassverfahren und/oder mindestens eines Dispersionsmittels, sodass eine Dispersion und/oder eine wässrige Suspension des Mineralstoffs erhalten wird;
- und, ausschließlich im Falle des trockenen Pulvers, Trocknen der Dispersion und/oder der wässrigen Suspension des Mineralstoffs, woraufhin das erhaltene Pulver möglicherweise behandelt und gesichtet wird;

2. und/oder mit dem Mineralstoff, in Form einer wässrigen Dispersion und/oder einer wässrigen Suspension, die sich aus den folgenden Schritten ergibt:

- Zerkleinern des mineralischen Füllstoffs im trockenen Zustand, möglicherweise in Gegenwart mindestens eines Mahlhilfsmittels für Trockenverfahren, woraufhin das erhaltene Pulver möglicherweise behandelt und gesichtet wird;
- Herstellen einer Dispersion und / oder wässrigen Suspension des erhaltenen Pulvers, wobei das Polymer zugesetzt wird und möglicherweise ein Dispersionsmittel vorliegt;

3. und/oder mit dem Mineralstoff, in Form eines trockenen Pulvers, und/oder einer wässrigen Dispersion und/oder einer wässrigen Suspension, das/die sich aus den folgenden Schritten ergibt:

- Zusetzen des Polymers zu einer Dispersion und / oder zu einer wässrigen Suspension, welche den Mineralstoff enthält;
- und, ausschließlich im Falle des trockenen Pulvers, Trocknen der Dispersion und/oder der wässrigen Suspension des Mineralstoffs, woraufhin das erhaltene Pulver möglicherweise behandelt und gesichtet wird;

4. und / oder in Form eines trockenen Pulver, das mit den weiteren Bestandteilen a), b) und c) vermischt ist;
5. und / oder in Form einer wässrigen Lösung, die mit den weiteren Bestandteilen a), b) und c) vermischt ist;

**3.** Verwendung nach einem der Ansprüche 1 oder 2, **dadurch gekennzeichnet, dass** die Streichmasse Folgendes enthält, in Gewichtsprozentanteilen jedes der Bestandteile, bezogen auf das Gesamtgewicht der Streichmasse:

(a) einen Gehalt von 3 Teilen bis 20 Teilen, vorzugsweise von 5 Teilen bis 15 Trockengewichtsteilen, an Bindemittel, auf 100 Trockengewichtsteile an Mineralstoff,
(b) einen Gehalt von 0,1 Teilen bis 2 Teilen, vorzugsweise von 0,1 Teilen bis 1,5 Trockengewichtsteilen, an Kammpolymer, auf 100 Trockengewichtsteile an Mineralstoff,
(c) einen Wassergehalt in einer gewichtsmäßigen Menge im Bereich von 20 % bis 80 %, bezogen auf das Gesamtgewicht der Streichmasse.

**4.** Verwendung nach einem der Ansprüche 1 bis 3, **dadurch gekennzeichnet, dass** weiterhin ein Wasserbindemittel und/oder Verdickungsmittel eingesetzt wird, das sich von dem verwendeten Kammpolymer unterscheidet.

**5.** Verwendung nach einem der Ansprüche 1 bis 4, **dadurch gekennzeichnet, dass** der Mineralstoff aus natürlichem oder synthetischem Calciumcarbonat, Dolomitgesteinen, Kaolin, Talkum, Gips, Titanoxid, Satinweiß oder auch Aluminiumtrihydroxid, Glimmer, Ruß und Mischungen dieser Füllstoffe untereinander, wie etwa Talkum-Calciumcarbonat-Mischungen, Calciumcarbonat-Kaolin-Mischungen, oder auch Mischungen von Calciumcarbonat mit Aluminiumtrihydroxid, oder auch Mischungen mit synthetischen oder natürliche Fasern, oder aber Mischgefügen von Mineralien wie den Mischgefügen von Talkum-Calciumcarbonat oder Talkum-Titandioxid ausgewählt ist, wobei er vorzugsweise aus natürlichem oder synthetischem Calciumcarbonat, Kaolin, Talkum und Mischungen dieser Füllstoffe ausgewählt ist, wobei er mit starkem Vorzug aus natürlichem oder synthetischem Calciumcarbonat oder deren Mischungen ausgewählt ist, und mit noch stärkerem Vorzug aus Marmor, Calcit, Kreide oder deren Mischungen ausgewählt ist.

**6.** Verwendung nach einem der Ansprüche 1 bis 5, **dadurch gekennzeichnet, dass** das Bindemittel aus den wasserlöslichen Bindemitteln und insbesondere aus Stärke, oder aus den synthetischen Polymerlatex-Bindemitteln wie etwa den Styrol-Acrylverbindungen und den Styrol-Butadien-Verbindungen oder deren Mischungen, oder aus den Mischungen dieser Bindemittel ausgewählt ist.

**7.** Verwendung nach einem der Ansprüche 1 bis 6, **dadurch gekennzeichnet, dass** die Kammpolymere sich aus Folgendem zusammensetzen:

(a) mindestens einem anionischen Monomer mit funktioneller Carbonsäure- oder Dicarbonsäure- oder Phosphorsäure- oder Phosphonsäure- oder Sulfonsäuregruppe oder deren Mischung,

(b) mindestens einem nichtionischen Monomer, wobei das nichtionische Monomer aus mindestens einem Monomer der Formel (I) besteht:

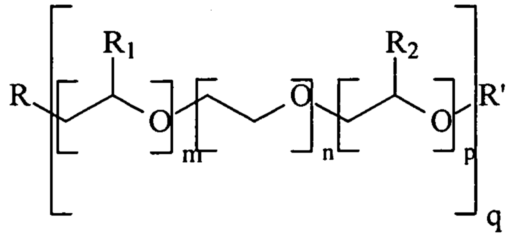

(I)

wobei:

- m und p für eine Anzahl an Alkylenoxidbausteinen von höchstens 150 stehen,
- n für eine Anzahl an Ethylenoxidbausteinen von höchstens 150 steht,
- q für eine ganze Zahl steht, die mindestens gleich 1 und derart ist, dass $5 \leq (m+n+p)q \leq 150$,und vorzugsweise derart ist, dass $15 \leq (m+n+p)q \leq 120$
- $R_1$ für Wasserstoff oder einen Methyl- oder Ethylrest steht,
- $R_2$ für Wasserstoff oder einen Methyl- oder Ethylrest steht,
- R für einen Rest steht, der eine polymerisierbare ungesättigte funktionelle Gruppe enthält, wobei er vorzugsweise der Gruppe der Vinylverbindungen sowie der Gruppe der Acrylsäure-, Methacrylsäure-, Maleinsäure-, Itaconsäure-, Crotonsäure-, Vinylphthalsäureester oder auch der Gruppe der ungesättigten Urethanverbindungen, wie etwa Acrylurethan, Methacrylurethan, α-α'-Dimethylisopropenylbenzylurethan, Allylurethan, wie auch der Gruppe der substituierten oder unsubstituierten Allyl- oder Vinylether oder aber der Gruppe der ethylenisch ungesättigten Amide oder Imide angehört,
- R' für einen Kohlenwasserstoffrest mit 1 bis 4 Kohlenstoffatomen steht, oder aus der Mischung mehrerer Monomere der Formel (I),

(c) möglicherweise mindestens einem acrylamid- oder methacrylamidartigen Monomer oder deren Derivaten wie etwa N-[3-(Dimethylamino)propyl]acrylamid oder N-[3-(Dimethylamino) propyl]methacrylamid und deren Mischungen, oder auch mindestens einem wasserunlöslichen Monomer wie etwa den Alkylacrylaten oder -methacrylaten, den ungesättigten Estern wie etwa N-[2-(Dimethylamino)ethyl]methacrylat oder N-[2-(Dimethylamino)ethyl]acrylat, den Vinylverbindungen wie etwa Vinylacetat, Vinylpyrrolidon, Styrol, alpha-Methylstyrol und deren Derivaten, oder mindestens einem kationischen Monomer oder quartärem Ammonium wie etwa dem Chlorid oder dem Sulfat von [2-(Methacryloyloxy)ethyl]trimethylammonium, dem Chlorid oder dem Sulfat von [2-(Acryloyloxy)ethyl]trimethylammonium, dem Chlorid oder Sulfat von [3-(Acrylamido)propyl]trimethylammonium, dem Chlorid oder Sulfat von Dimethyldiallylammonium, dem Chlorid oder Sulfat von [3-(Methacrylamido) propyl]trimethylammonium, oder auch mindestens einem organofluorartigen oder organosilylartigen Monomer, oder der Mischung mehrerer dieser Monomere,

(d) möglicherweise mindestens einem Monomer, das mindestens zweifach ethylenisch ungesättigt ist,

**8.** Verwendung nach einem der Ansprüche 1 bis 7, **dadurch gekennzeichnet, dass** das Kammpolymer aus Folgendem besteht:

(a) mindestens einem ethylenisch ungesättigten anionischen Monomer mit funktioneller Monocarbonsäuregruppe, das aus den ethylenisch ungesättigten Monomeren mit funktioneller Monocarbonsäuregruppe wie etwa Acryl- oder Methacrylsäure, oder aber den Halbestern von Dicarbonsäuren wie etwa den $C_1$-$C_4$-Monoestern von Malein- oder Itaconsäure oder deren Mischungen ausgewählt ist, oder aus den ethylenisch ungesättigten Monomeren mit funktioneller Dicarbonsäuregruppe wie etwa Crotonsäure, Isocrotonsäure, Zimtsäure, Itaconsäure, Maleinsäure, oder aber den Carbonsäureanhydriden wie etwa Maleinsäureanhydrid ausgewählt ist, oder aus den ethylenisch ungesättigten Monomeren mit funktioneller Sulfonsäuregruppe wie etwa Acrylamidomethylpropansulfonsäure, Natriummethallylsulfonat, Vinylsulfonsäure und Styrolsulfonsäure ausgewählt ist, oder auch aus den ethylenisch ungesättigten Monomeren mit funktioneller Phosphorsäuregruppe wie etwa Vinylphosphorsäure, Ethylenglykolmethacrylatphosphat, Propylenglykolmethacrylatphosphat, Ethylenglykolacrylatphosphat, Propylenglykolacrylatphosphat und deren Ethoxylaten ausgewählt ist, oder aber aus den ethylenisch

ungesättigten Monomeren mit funktioneller Phosphonsäuregruppe wie etwa Vinylphosphonsäure oder deren Mischungen ausgewählt ist,
(b) mindestens einem ethylenisch ungesättigten nichtionischen Monomers der Formel (I):

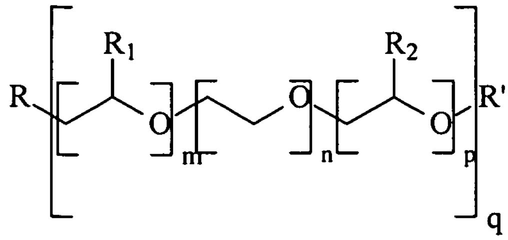

(I)

wobei:

- m und p für eine Anzahl an Alkylenoxidbausteinen von höchstens 150 stehen,
- n für eine Anzahl an Ethylenoxidbausteinen von höchstens 150 steht,
- q für eine ganze Zahl steht, die mindestens gleich 1 und derart ist, dass $5 \leq (m+n+p)q \leq 150$, und vorzugsweise derart ist, dass $15 \leq (m+n+p)q \leq 120$,
- $R_1$ für Wasserstoff oder einen Methyl- oder Ethylrest steht,
- $R_2$ für Wasserstoff oder einen Methyl- oder Ethylrest steht,
- R für einen Rest steht, der eine polymerisierbare ungesättigte funktionelle Gruppe enthält, wobei er vorzugsweise der Gruppe der Vinylverbindungen sowie der Gruppe der Acrylsäure-, Methacrylsäure-, Maleinsäure-, Itaconsäure-, Crotonsäure-, Vinylphthalsäureester oder auch der Gruppe der ungesättigten Urethanverbindungen, wie etwa Acrylurethan, Methacrylurethan, α-α'-Dimethylisopropenylbenzylurethan, Allylurethan, wie auch der Gruppe der substituierten oder unsubstituierten Allyl- oder Vinylether oder aber der Gruppe der ethylenisch ungesättigten Amide oder Imide angehört,
- R' für einen Kohlenwasserstoffrest mit 1 bis 4 Kohlenstoffatomen steht, oder aus der Mischung mehrerer Monomere der Formel (I),

(c) möglicherweise mindestens einem acrylamid- oder methacrylamidartigen Monomer oder deren Derivaten wie etwa N-[3-(Dimethylamino)propyl]acrylamid oder N-[3-(Dimethylamino) propyl]methacrylamid und deren Mischungen, oder auch mindestens einem wasserunlöslichen Monomer wie etwa den Alkylacrylaten oder -methacrylaten, den ungesättigten Estern wie etwa N-[2-(Dimethylamino)ethyl]methacrylat oder N-[2-(Dimethylamino)ethyl]acrylat, den Vinylverbindungen wie etwa Vinylacetat, Vinylpyrrolidon, Styrol, alpha-Methylstyrol und deren Derivaten, oder mindestens einem kationischen Monomer oder quartärem Ammonium wie etwa dem Chlorid oder dem Sulfat von [2-(Methacryloyloxy)ethyl]trimethylammonium, dem Chlorid oder dem Sulfat von [2-(Acryloyloxy)ethyl]trimethylammonium, dem Chlorid oder Sulfat von [3-(Acrylamido)propyl]trimethylammonium, dem Chlorid oder Sulfat von Dimethyldiallylammonium, dem Chlorid oder Sulfat von [3-(Methacrylamido) propyl]trimethylammonium, oder aber mindestens einem organofluorartigen Monomer, oder aber mindestens einem organosilylartigen Monomer, das vorzugsweise aus den Molekülen nach den Formeln (IIa) oder (IIb) ausgewählt ist:

mit der Formel (IIa)

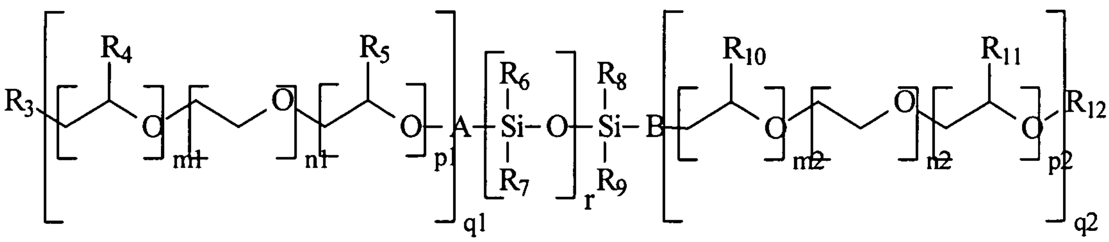

wobei:

- $m_1$, $p_1$, $m_2$ und $p_2$ für eine Anzahl an Alkylenoxidbausteinen von höchstens 150 stehen,
- $n_1$ und $n_2$ für eine Anzahl an Ethylenoxidbausteinen von höchstens 150 stehen,
- $q_1$ und $q_2$ für eine ganze Zahl stehen, die mindestens gleich 1 ist und derart ist, dass $0 \leq (m_1+n_1+p_1) q_1 \leq 150$ und $0 \leq (m_2+n_2+p_2)q_2 \leq 150$,
- r für eine Anzahl steht, die derart ist, dass $1 \leq r \leq 200$,
- $R_3$ für einen Rest steht, der eine polymerisierbare ungesättigte funktionelle Gruppe enthält, wobei er vorzugsweise der Gruppe der Vinylverbindungen sowie der Gruppe der Acrylsäure-, Methacrylsäure-, Maleinsäure-, Itaconsäure-, Crotonsäure-, Vinylphthalsäureester oder auch der Gruppe der ungesättigten Urethanverbindungen, wie etwa Acrylurethan, Methacrylurethan, α-α'-Dimethylisopropenylbenzylurethan, Allylurethan, wie auch der Gruppe der substituierten oder unsubstituierten Allyl- oder Vinylether oder aber der Gruppe der ethylenisch ungesättigten Amide oder Imide angehört,
- $R_4$, $R_5$, $R_{10}$ und $R_{11}$ für Wasserstoff oder einen Methyl- oder Ethylrest stehen,
- $R_6$, $R_7$, $R_8$ und $R_9$ für geradkettige oder verzweigte Alkyl- oder Aryl- oder Alkylaryl- oder Arylalkylgruppen mit 1 bis 20 Kohlenstoffatomen oder deren Mischung stehen,
- $R_{12}$ für einen Kohlenwasserstoffrest mit 1 bis 40 Kohlenstoffatomen steht,
- A und B Gruppen sind, die möglicherweise vorhanden sind, wobei sie gegebenenfalls für einen Kohlenwasserstoffrest mit 1 bis 4 Kohlenstoffatomen stehen,

mit der Formel (IIb)

$$R\text{-}A\text{-}Si(OB)_3$$

wobei:

- R für einen Rest steht, der eine polymerisierbare ungesättigte funktionelle Gruppe enthält, wobei er vorzugsweise der Gruppe der Vinylverbindungen sowie der Gruppe der Acrylsäure-, Methacrylsäure-, Maleinsäure-, Itaconsäure-, Crotonsäure-, Vinylphthalsäureester oder auch der Gruppe der ungesättigten Urethanverbindungen, wie etwa Acrylurethan, Methacrylurethan, α-α'-Dimethylisopropenylbenzylurethan, Allylurethan, wie auch der Gruppe der substituierten oder unsubstituierten Allyl- oder Vinylether oder aber der Gruppe der ethylenisch ungesättigten Amide oder Imide angehört,
- A eine Gruppe ist, die möglicherweise vorhanden ist, wobei sie gegebenenfalls für einen Kohlenwasserstoffrest mit 1 bis 4 Kohlenstoffatomen steht,
- B für einen Kohlenwasserstoffrest mit 1 bis 4 Kohlenstoffatomen steht, oder aus der Mischung mehrerer dieser Monomere,

(d) möglicherweise mindestens einem vernetzenden Monomer, das aus der Gruppe ausgewählt ist, welche aus Ethylenglykoldimethacrylat, Trimethylolpropantriacrylat, Allylacrylat, den Allylmaleaten, Methylen-bisacrylamid, Methylen-bis-methacrylamid, Tetrallyloxyethan, den Triallylcyanuraten, den Allylethem, wie sie ausgehend von Polyolen wie etwa Pentaerythrit, Sorbit, Saccharose erhalten werden, besteht, oder aus den Molekülen nach der Formel (III) ausgewählt ist:

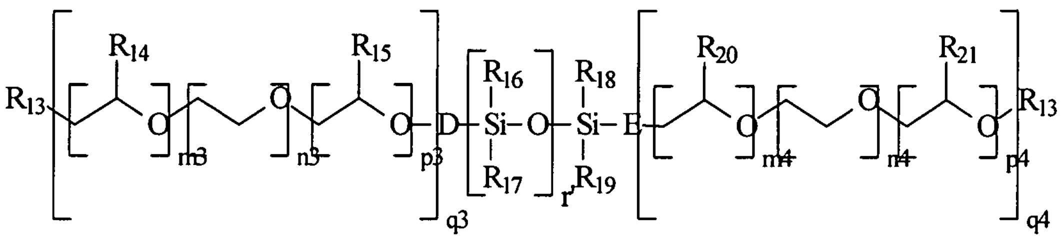

(III)

wobei:

- $m_3$, $p_3$, $m_4$ und $p_4$ für eine Anzahl an Alkylenoxidbausteinen von höchstens 150 stehen,
- $n_3$ und $n_4$ für eine Anzahl an Ethylenoxidbausteinen von höchstens 150 stehen,
- $q_3$ und $q_4$ für eine ganze Zahl stehen, die mindestens gleich 1 ist und derart ist, dass $0 \leq (m_3+n_3+p_3)q_3 \leq$

150 und $0 \leq (m_4+n_4+p_4)q_4 \leq 150$,
- r' für eine Anzahl steht, die derart ist, dass $1 \leq r' \leq 200$,
- $R_{13}$ für einen Rest steht, der eine polymerisierbare ungesättigte funktionelle Gruppe enthält, wobei er vorzugsweise der Gruppe der Vinylverbindungen sowie der Gruppe der Acrylsäure-, Methacrylsäure-, Maleinsäure-, Itaconsäure-, Crotonsäure-, Vinylphthalsäureester oder auch der Gruppe der ungesättigten Urethanverbindungen, wie etwa Acrylurethan, Methacrylurethan, α-α'-Dimethylisopropenylbenzylurethan, Allylurethan, wie auch der Gruppe der substituierten oder unsubstituierten Allyl- oder Vinylether oder aber der Gruppe der ethylenisch ungesättigten Amide oder Imide angehört,
- $R_{14}$, $R_{15}$, $R_{20}$ und $R_{21}$ für Wasserstoff oder einen Methyl- oder Ethylrest stehen,
- $R_{16}$, $R_{17}$, $R_{18}$ und $R_{19}$ für geradkettige oder verzweigte Alkyl- oder Aryl-oder Alkylaryl- oder Arylalkylgruppen mit 1 bis 20 Kohlenstoffatomen oder deren Mischung stehen,
- D und E Gruppen sind, die möglicherweise vorhanden sind, wobei sie gegebenenfalls für einen Kohlenwasserstoffrest mit 1 bis 4 Kohlenstoffatomen stehen,

oder aus der Mischung mehrerer dieser Monomere,

**9.** Verwendung nach einem der Ansprüche 1 bis 8, **dadurch gekennzeichnet, dass** das Kammpolymer aus Folgendem besteht, ausgedrückt nach Gewicht:

(a) 2 % bis 95 % und mit noch stärkerem Vorzug 5 % bis 90 % mindestens eines ethylenisch ungesättigten anionischen Monomers mit funktioneller Monocarbonsäuregruppe, das aus den ethylenisch ungesättigten Monomeren mit funktioneller Monocarbonsäuregruppe wie etwa Acryl- oder Methacrylsäure, oder aber den Halbestern von Dicarbonsäuren wie etwa den $C_1$-$C_4$-Monoestern von Malein- oder Itaconsäure oder deren Mischungen ausgewählt ist, oder aus den ethylenisch ungesättigten Monomeren mit funktioneller Dicarbonsäuregruppe wie etwa Crotonsäure, Isocrotonsäure, Zimtsäure, Itaconsäure, Maleinsäure, oder aber den Carbonsäureanhydriden wie etwa Maleinsäureanhydrid ausgewählt ist, oder aus den ethylenisch ungesättigten Monomeren mit funktioneller Sulfonsäuregruppe wie etwa Acrylamidomethylpropansulfonsäure, Natriummethallylsulfonat, Vinylsulfonsäure und Styrolsulfonsäure ausgewählt ist, oder auch aus den ethylenisch ungesättigten Monomeren mit funktioneller Phosphorsäuregruppe wie etwa Vinylphosphorsäure, Ethylenglykolmethacrylatphosphat, Propylenglykolmethacrylatphosphat, Ethylenglykolacrylatphosphat, Propylenglykolacrylatphosphat und deren Ethoxylaten ausgewählt ist, oder aber aus den ethylenisch ungesättigten Monomeren mit funktioneller Phosphonsäuregruppe wie etwa Vinylphosphonsäure oder deren Mischungen ausgewählt ist,
(b) 2 % bis 95 % und mit noch stärkerem Vorzug 5 % bis 90 % mindestens eines ethylenisch ungesättigten nichtionischen Monomers der Formel (I):

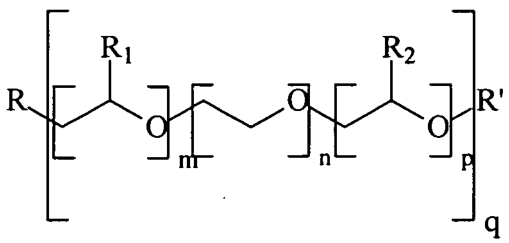

(I)

wobei:

- m und p für eine Anzahl an Alkylenoxidbausteinen von höchstens 150 stehen,
- n für eine Anzahl an Ethylenoxidbausteinen von höchstens 150 steht,
- q für eine ganze Zahl steht, die mindestens gleich 1 und derart ist, dass $5 \leq (m+n+p)q \leq 150$, und vorzugsweise derart ist, dass $15 \leq (m+n+p)q \leq 120$,
- $R_1$ für Wasserstoff oder einen Methyl- oder Ethylrest steht,
- $R_2$ für Wasserstoff oder einen Methyl- oder Ethylrest steht,
- R für einen Rest steht, der eine polymerisierbare ungesättigte funktionelle Gruppe enthält, wobei er vorzugsweise der Gruppe der Vinylverbindungen sowie der Gruppe der Acrylsäure-, Methacrylsäure-, Maleinsäure-, Itaconsäure-, Crotonsäure-, Vinylphthalsäureester oder auch der Gruppe der ungesättigten Urethanverbindungen, wie etwa Acrylurethan, Methacrylurethan, α-α'-Dimethylisopropenylbenzylurethan, Allylurethan, wie auch der Gruppe der substituierten oder unsubstituierten Allyl- oder Vinylether oder aber der Gruppe der ethylenisch ungesättigten Amide oder Imide angehört,

- R' für einen Kohlenwasserstoffrest mit 1 bis 4 Kohlenstoffatomen steht, oder aus der Mischung mehrerer Monomere der Formel (I),

(c) 0 % bis 50 % mindestens eines acrylamid- oder methacrylamidartigen Monomers oder deren Derivaten wie etwa N-[3-(Dimethylamino)propyl]acrylamid oder N-[3-(Dimethylamino)propyl]methacrylamid und deren Mischungen, oder auch mindestens eines wasserunlöslichen Monomers wie etwa den Alkylacrylaten oder -methacrylaten, den ungesättigten Estern wie etwa N-[2-(Dimethylamino)ethyl]methacrylat oder N-[2-(Dimethylamino)ethyl]acrylat, den Vinylverbindungen wie etwa Vinylacetat, Vinylpyrrolidon, Styrol, alpha-Methylstyrol und deren Derivaten, oder mindestens eines kationischen Monomers oder quartären Ammoniums wie etwa dem Chlorid oder dem Sulfat von [2-(Methacryloyloxy)ethyl]trimethylammonium, dem Chlorid oder dem Sulfat von [2-(Acryloyloxy)ethyl]trimethylammonium, dem Chlorid von [3-(Acrylamido)propyl]trimethylammonium, dem Chlorid oder Sulfat von Dimethyldiallylammonium, dem Chlorid oder Sulfat von [3-(Methacrylamido)propyl] trimethylammonium, oder aber eines organofluorartigen Monomers, oder aber eines organosilylartigen Monomers, das vorzugsweise aus den Molekülen nach den Formeln (IIa) oder (IIb) ausgewählt ist:

mit der Formel (IIa)

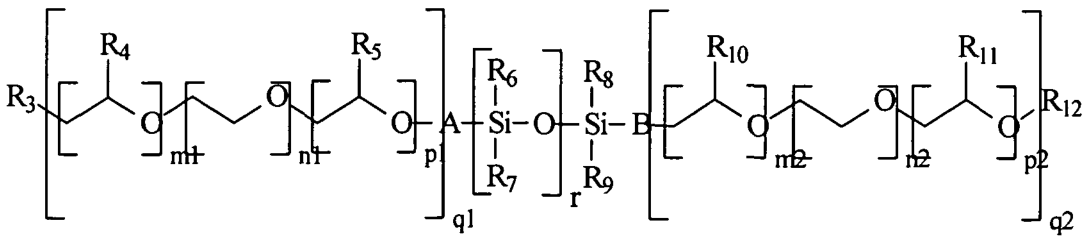

wobei:

- $m_1$, $p_1$, $m_2$ und $p_2$ für eine Anzahl an Alkylenoxidbausteinen von höchstens 150 stehen,
- $n_1$ und $n_2$ für eine Anzahl an Ethylenoxidbausteinen von höchstens 150 stehen,
- $q_1$ und $q_2$ für eine ganze Zahl stehen, die mindestens gleich 1 ist und derart ist, dass $0 \leq (m_1+n_1+p_1) q_1 \leq 150$ und $0 \leq (m_2+n_2+p_2)q_2 \leq 150$,
- r für eine Anzahl steht, die derart ist, dass $1 \leq r \leq 200$,
- $R_3$ für einen Rest steht, der eine polymerisierbare ungesättigte funktionelle Gruppe enthält, wobei er vorzugsweise der Gruppe der Vinylverbindungen sowie der Gruppe der Acrylsäure-, Methacrylsäure-, Maleinsäure-, Itaconsäure-, Crotonsäure-, Vinylphthalsäureester oder auch der Gruppe der ungesättigten Urethanverbindungen, wie etwa Acrylurethan, Methacrylurethan, α-α'-Dimethylisopropenylbenzylurethan, Allylurethan, wie auch der Gruppe der substituierten oder unsubstituierten Allyl- oder Vinylether oder aber der Gruppe der ethylenisch ungesättigten Amide oder Imide angehört,
- $R_4$, $R_5$, $R_{10}$ und $R_{11}$ für Wasserstoff oder einen Methyl- oder Ethylrest stehen,
- $R_6$, $R_7$, $R_8$ und $R_9$ für geradkettige oder verzweigte Alkyl- oder Aryl- oder Alkylaryl- oder Arylalkylgruppen mit 1 bis 20 Kohlenstoffatomen oder deren Mischung stehen,
- $R_{12}$ für einen Kohlenwasserstoffrest mit 1 bis 40 Kohlenstoffatomen steht,
- A und B Gruppen sind, die möglicherweise vorhanden sind, wobei sie gegebenenfalls für einen Kohlenwasserstoffrest mit 1 bis 4 Kohlenstoffatomen stehen,

mit der Formel (IIb)

$$R\text{-}A\text{-}Si(OB)_3$$

wobei:

- R für einen Rest steht, der eine polymerisierbare ungesättigte funktionelle Gruppe enthält, wobei er vorzugsweise der Gruppe der Vinylverbindungen sowie der Gruppe der Acrylsäure-, Methacrylsäure-, Maleinsäure-, Itaconsäure-, Crotonsäure-, Vinylphthalsäureester oder auch der Gruppe der ungesättigten Urethanverbindungen, wie etwa Acrylurethan, Methacrylurethan, α-α'-Dimethylisopropenylbenzylurethan, Allylurethan, wie auch der Gruppe der substituierten oder unsubstituierten Allyl- oder Vinylether oder aber der Gruppe der ethylenisch ungesättigten Amide oder Imide angehört,
- A eine Gruppe ist, die möglicherweise vorhanden ist, wobei sie gegebenenfalls für einen Kohlenwasserstoffrest mit 1 bis 4 Kohlenstoffatomen steht,
- B für einen Kohlenwasserstoffrest mit 1 bis 4 Kohlenstoffatomen steht, oder aus der Mischung mehrerer dieser Monomere,

(d) 0 % bis 3 % mindestens eines vernetzenden Monomers, das aus der Gruppe ausgewählt ist, welche aus Ethylenglykoldimethacrylat, Trimethylolpropantriacrylat, Allylacrylat, den Allylmaleaten, Methylen-bisacrylamid, Methylen-bis-methacrylamid, Tetrallyloxyethan, den Triallylcyanuraten, den Allylethem, wie sie ausgehend von Polyolen wie etwa Pentaerythrit, Sorbit, Saccharose erhalten werden, besteht, oder aus den Molekülen nach der Formel (III) ausgewählt ist:

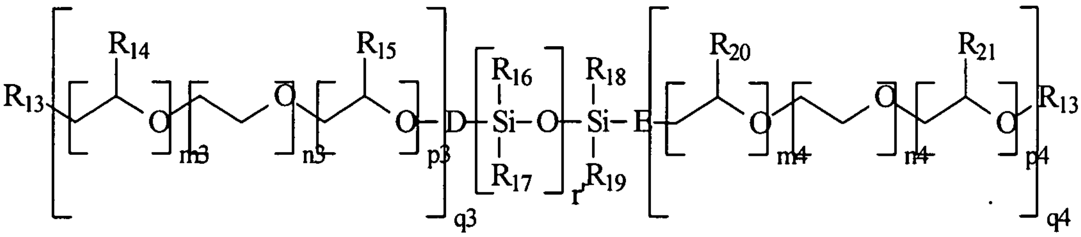

(III)

wobei:

- $m_3$, $p_3$, $m_4$ und $p_4$ für eine Anzahl an Alkylenoxidbausteinen von höchstens 150 stehen,
- $n_3$ und $n_4$ für eine Anzahl an Ethylenoxidbausteinen von höchstens 150 stehen,
- $q_3$ und $q_4$ für eine ganze Zahl stehen, die mindestens gleich 1 ist und derart ist, dass $0 \leq (m_3+n_3+p_3)q_3 \leq 150$ und $0 \leq (m_4+n_4+p_4)q_4 \leq 150$,
- r' für eine Anzahl steht, die derart ist, dass $1 \leq r' \leq 200$,
- $R_{13}$ für einen Rest steht, der eine polymerisierbare ungesättigte funktionelle Gruppe enthält, wobei er vorzugsweise der Gruppe der Vinylverbindungen sowie der Gruppe der Acrylsäure-, Methacrylsäure-, Maleinsäure-, Itaconsäure-, Crotonsäure-, Vinylphthalsäureester oder auch der Gruppe der ungesättigten Urethanverbindungen, wie etwa Acrylurethan, Methacrylurethan, $\alpha$-$\alpha$'-Dimethylisopropenylbenzylurethan, Allylurethan, wie auch der Gruppe der substituierten oder unsubstituierten Allyl- oder Vinylether oder aber der Gruppe der ethylenisch ungesättigten Amide oder Imide angehört,
- $R_{14}$, $R_{15}$, $R_{20}$ und $R_{21}$ für Wasserstoff oder einen Methyl- oder Ethylrest stehen,
- $R_{16}$, $R_{17}$, $R_{18}$ und $R_{19}$ für geradkettige oder verzweigte Alkyl- oder Aryl-oder Alkylaryl- oder Arylalkylgruppen mit 1 bis 20 Kohlenstoffatomen oder deren Mischung stehen,
- D und E Gruppen sind, die möglicherweise vorhanden sind, wobei sie gegebenenfalls für einen Kohlenwasserstoffrest mit 1 bis 4 Kohlenstoffatomen stehen,

oder aus der Mischung mehrerer dieser Monomere,

wobei die Anteile der Bestandteile a), b), c) und d) insgesamt 100 % ergeben.

## Claims

1. Use in a process to manufacture paper coating colors, where the said coating colors contain:

(a) at least one mineral matter,
(b) at least one binder,
(c) water,

as agent :

- having the function, for a given Brookfield™ viscosity, to increase the water retention of the paper coating color compared to a water-retaining thickening agent of the prior art;
- having the function, for a given water retention, to reduce the Brookfield™ viscosity of the paper coating color compared to a water-retaining thickening agent of the prior art;

of an agent consisting of at least one comb polymer, obtained by grafting at least one polyalkylene oxide function on to the polymer chain, where the said chain results from polymerisation of at least one ethylenic unsaturated monomer,
and **characterised in that** :

the said comb polymer(s) has(have) a molecular weight noted $M_w$ of between 1,000,000 g/mole and 7,000,000 g/mole, determined as described in the description,
and **in that** said comb polymers consist in :

(a) of at least one anionic monomer with a carboxylic or dicarboxylic or phosphoric or phosphonic or sulphonic function, or their blends,
(b) of at least one non-ionic monomer, where the non-ionic monomer consists of at least one monomer of formula (I):

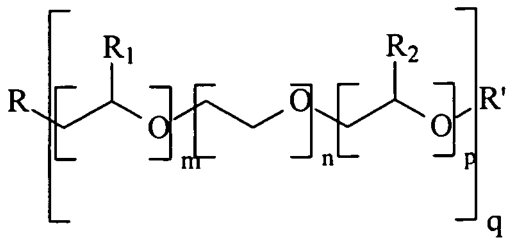

(I)

where:

- m and p represent a number of alkylene oxide units of less than or equal to 150,
- n represents a number of ethylene oxide units of less than or equal to 150,
- q represents an integer at least equal to 1 and such that $5 \leq (m+n+p)q \leq 150$, and preferentially such that $15 \leq (m+n+p)q \leq 120$
- $R_1$ represents hydrogen or the methyl or ethyl radical,
- $R_2$ represents hydrogen or the methyl or ethyl radical,
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides,
- R' represents a hydrocarbonated radical having 1 to 4 carbon atoms,

or a blend of several monomers of formula (I),
(c) possibly at least one monomer of the acrylamide or methacrylamide type, or their derivates such as N-[3-(dimethylamino) propyl] acrylamide or N-[3-(dimethylamino) propyl] methacrylamide, and their blends, or again of at least one non-water soluble monomer such as the alkyl acrylates or methacrylates, the unsaturated esters such as N-[2-(dimethylamino) ethyl] methacrylate, or N-[2-(dimethylamino) ethyl] acrylate, the vinylics such as vinyl acetate, vinylpyrrolidone, styrene, alphamethylstyrene and their derivates, or at least one cationic monomer or quaternary ammonium such as [2-(methacryloyloxy) ethyl] trimethyl ammonium chloride or sulphate, [2-(acryloyloxy) ethyl] trimethyl ammonium chloride or sulphate, [3-(acrylamido) propyl] trimethyl ammonium chloride or sulphate, dimethyl diallyl ammonium chloride or sulphate, [3-(methacrylamido) propyl] trimethyl ammonium chloride or sulphate, or again at least one organofluorate or organosililate monomer, or a blend of several of these monomers,
(d) possibly at least one monomer having at least two ethylenic unsaturations,

**2.** Use according to claim 1, **characterised in that** the said polymer is introduced:

1. with the mineral matter, in the form of dry powder, and/or of aqueous dispersion and/or of aqueous suspension, resulting from the stages of:

- grinding and/or dispersion in a wet medium and preferentially aqueous medium of the mineral matter in the presence of the said polymer, and possibly in the presence of at least one grinding agent by a wet method and/or of at least one dispersing agent, leading to an aqueous dispersion and/or suspension of the mineral matter being obtained;
- and in the case of the dry powder only, of drying of the aqueous dispersion and/or suspension of the mineral matter, possibly followed by processing and classification of the powder obtained;

2. and/or with the mineral matter, in the form of an aqueous dispersion and/or an aqueous suspension, resulting from the stages of:

- dry grinding of the mineral filler, possibly in the presence of at least one dry grinding agent, possibly followed by processing and classification of the powder obtained;
- aqueous dispersion and/or suspension of the powder obtained, with introduction of the said polymer and possibly in the presence of a dispersing agent;

3. and/or with the mineral matter, in the form of dry powder, and/or aqueous dispersion and/or aqueous suspension, resulting from the stages of:

- introduction of the said polymer into a dispersion and/or into an aqueous suspension containing the mineral matter;
- and in the case of the dry powder only, of drying of the aqueous dispersion and/or suspension of the mineral matter, possibly followed by processing and classification of the powder obtained;

4. and/or in the form of dry powder mixed with the other constituents a), b) and c);
5. and/or in the form of an aqueous solution mixed with the other constituents a), b) and c);

**3.** Use according to one of claims 1 or 2, **characterised in that** the paper coating contains, as a percentage by weight of each constituent relative to the total weight of the paper coating color:

(a) contains 3 to 20 parts, and preferentially 5 to 15 parts, by dry weight of binder, for 100 parts by dry weight of mineral matter,
(b) contains 0.1 to 2 parts, and preferentially 0.1 to 1.5 parts, by dry weight of comb polymer, for 100 parts by dry weight of mineral matter,
(c) contains water in a quantity by weight of between 20% and 80%, relative to the total weight of the paper coating color.

**4.** Use according to one of the claims 1 to 3, **characterised in that** at least one water-retaining agent and/or thickening agent other than the comb polymer used is also used.

**5.** Use according to one of the claims 1 to 4, **characterised in that** the mineral matter is chosen from among natural or synthetic calcium carbonate, the dolomites, kaolin, talc, gypsum, titanium dioxide, satin white or again aluminium trihydroxide, mica, carbon black and a blend of more than one of these fillers together, such as talc-calcium carbonate, calcium carbonate-kaolin blends, or again blends of calcium carbonate with aluminium trihydroxide, or again blends with synthetic or natural fibres, or again mineral co-structures such as talc-calcium carbonate or talc-titanium dioxide co-structures, preferentially chosen from among natural or synthetic calcium carbonate, kaolin, talc and blends of these fillers, and very preferentially chosen from among natural or synthetic calcium carbonate or their blends, and even more preferentially chosen from among marble, calcite, chalk or their blends.

**6.** Use according to one of the claims 1 to 5, **characterised in that** the binder is chosen from among the water-soluble binders and notably starch, or from among the synthetic latex polymer binders, such as styrene-acrylic and the styrene-butadienes or their blends, or the blends of these binders.

**7.** Use according to one of the claims 1 to 6, **characterised in that** the comb polymers contain :

(a) of at least one anionic monomer with a carboxylic or dicarboxylic or phosphoric or phosphonic or sulphonic function, or their blends,

(b) of at least one non-ionic monomer, where the non-ionic monomer consists of at least one monomer of formula (I):

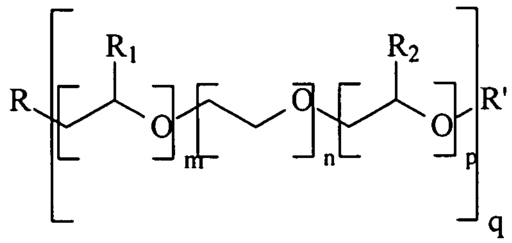

(I)

where:

- m and p represent a number of alkylene oxide units of less than or equal to 150,
- n represents a number of ethylene oxide units of less than or equal to 150,
- q represents an integer at least equal to 1 and such that $5 \leq (m+n+p)q \leq 150$, and preferentially such that $15 \leq (m+n+p)q \leq 120$
- $R_1$ represents hydrogen or the methyl or ethyl radical,
- $R_2$ represents hydrogen or the methyl or ethyl radical,
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as acrylurethane, methacrylurethane, $\alpha$-$\alpha$' dimethyl-isopropenyl-benzylurethane, allylurethane, or to the group of allylic or vinylic ethers, whether or not substituted, or again to the group of ethylenically unsaturated amides or imides,
- R' represents a hydrocarbonated radical having 1 to 4 carbon atoms,

or a blend of several monomers of formula (I),

(c) possibly at least one monomer of the acrylamide or methacrylamide type, or their derivates such as N-[3-(dimethylamino) propyl] acrylamide or N-[3-(dimethylamino) propyl] methacrylamide, and their blends, or again of at least one non-water soluble monomer such as the alkyl acrylates or methacrylates, the unsaturated esters such as N-[2-(dimethylamino) ethyl] methacrylate, or N-[2-(dimethylamino) ethyl] acrylate, the vinylics such as vinyl acetate, vinylpyrrolidone, styrene, alphamethylstyrene and their derivates, or at least one cationic monomer or quaternary ammonium such as [2-(methacryloyloxy) ethyl] trimethyl ammonium chloride or sulphate, [2-(acryloyloxy) ethyl] trimethyl ammonium chloride or sulphate, [3-(acrylamido) propyl] trimethyl ammonium chloride or sulphate, dimethyl diallyl ammonium chloride or sulphate, [3-(methacrylamido) propyl] trimethyl ammonium chloride or sulphate, or again at least one organofluorate or organosililate monomer, or a blend of several of these monomers,

(d) possibly at least one monomer having at least two ethylenic unsaturations,

**8.** Use according to one of the claims 1 to 7, **characterised in that** the comb polymer consists:

(a) of at least one anionic monomer with ethylenic unsaturation and with a monocarboxylic function chosen from among the ethylenic unsaturation monomers and with a monocarboxylic function such as acrylic or methacrylic acid, or again the diacid hemiesters such as the $C_1$ to $C_4$ monoesters of maleic or itaconic acids, or their blends, or chosen from among the monomers with ethylenic unsaturation and with a dicarboxylic function such as crotonic, isocrotonic, cinnamic, itaconic, maleic acid, or again the anhydrides of carboxylic acids, such as maleic anhydride, or chosen from among the monomers with ethylenic unsaturation and with a sulphonic function such as acrylamido-methyl-propane-sulphonic acid, sodium methallylsulphonate, vinyl sulphonic acid and styrene sulphonic acid, or again chosen from among the monomers with ethylenic unsaturation and with a phosphoric function such as vinyl phosphoric acid, ethylene glycol methacrylate phosphate, propylene glycol methacrylate phosphate, ethylene glycol acrylate phosphate, propylene glycol acrylate phosphate and their ethoxylates, or again chosen from among the monomers with ethylenic unsaturation and with a phosphonic function such as vinyl phosphonic acid, or their blends,

(b) of a least one monomer with a non-ionic ethylenic unsaturation of formula (I):

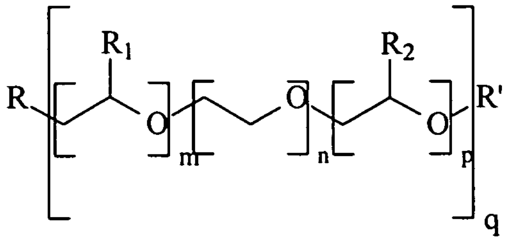

(I)

where:

- m and p represent a number of alkylene oxide units of less than or equal to 150,
- n represents a number of ethylene oxide units of less than or equal to 150,
- q represents a whole number at least equal to 1 and such that $5 \leq (m+n+p)q \leq 150$, and preferentially such that $15 \leq (m+n+p)q \leq 120$,
- $R_1$ represents hydrogen or the methyl or ethyl radical,
- $R_2$ represents hydrogen or the methyl or ethyl radical,
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides,
- R' represents a hydrocarbonated radical having 1 to 4 carbon atoms,

or a blend of several monomers of formula (I),

(c) possibly at least one monomer of the acrylamide or methacrylamide type, or their derivates such as N-[3-(dimethylamino) propyl] acrylamide or N-[3-(dimethylamino) propyl] methacrylamide, and their blends, or again of at least one non-water soluble monomer such as the alkyl acrylates or methacrylates, the unsaturated esters such as N-[2-(dimethylamino) ethyl] methacrylate, or N-[2-(dimethylamino) ethyl] acrylate, the vinylics such as vinyl acetate, vinylpyrrolidone, styrene, alphamethylstyrene and their derivates, or at least one cationic monomer or quaternary ammonium such as [2-(methacryloyloxy) ethyl] trimethyl ammonium chloride or sulphate, [2-(acryloyloxy) ethyl] trimethyl ammonium chloride or sulphate, [3-(acrylamido) propyl] trimethyl ammonium chloride or sulphate, dimethyl diallyl ammonium chloride or sulphate, [3-(methacrylamido) propyl] trimethyl ammonium chloride or sulphate, or again at least one organofluorate monomer, or indeed at least one organosililate monomer, preferentially chosen from among the molecules of formulae (IIa) or (IIb):

with formula (IIa)

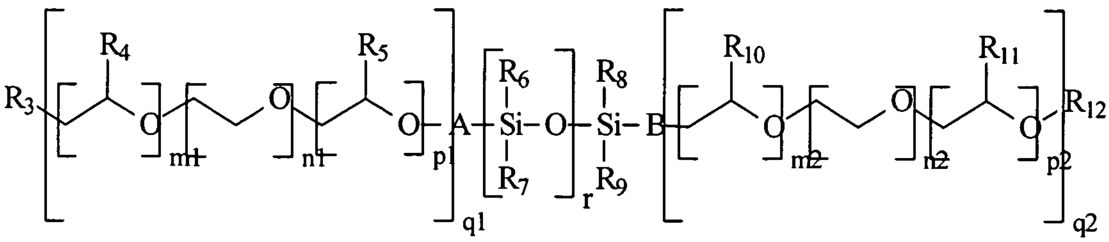

where:

- $m_1$, $p_1$, $m_2$ and $p_2$ represent a number of alkylene oxide units of less than or equal to 150,
- $n_1$ and $n_2$ represent a number of ethylene oxide units of less than or equal to 150,
- $q_1$ and $q_2$ represent a whole number at least equal to 1 and such that $0 \leq (m_1+n_1+p_1)q_1 \leq 150$ and $0 \leq (m_2+n_2+p_2)q_2 \leq 150$,

- r represents a number such that $1 \leq r \leq 200$,
- $R_3$ represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides,
- $R_4$, $R_5$, $R_{10}$ and $R_{11}$ represent hydrogen or the methyl or ethyl radical,
- $R_6$, $R_7$, $R_8$ and $R_9$ represent linear or branched alkyl or aryl, or alkylaryl or arylalkyl groupings, having 1 to 20 carbon atoms, or their blends,
- $R_{12}$ represents a hydrocarbonated radical having 1 to 40 carbon atoms,
- A and B are groupings which may be present, which then represent a hydrocarbonated radical having 1 to 4 carbon atoms,

with formula (IIb)

$$R\text{-}A\text{-}Si(OB)_3$$

where:

- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides,
- A is a grouping which may be present, which then represents a hydrocarbonated radical having 1 to 4 carbon atoms,
- B represents a hydrocarbonated radical having 1 to 4 carbon atoms,

or a blend of several of these monomers,

(d)and possibly at least one crosslinking monomer chosen from the group constituted by ethylene glycol dimethacrylate, trimethylolpropanetriacrylate, allyl acrylate, the allyl maleates, methylene-bis-acrylamide, methylenebismethacrylamide, tetrallyloxyethane, the triallylcyanurates, the allyl ethers obtained from polyols such as pentaerythritol, sorbitol, sucrose or others, or chosen from among the molecules of formula (III):

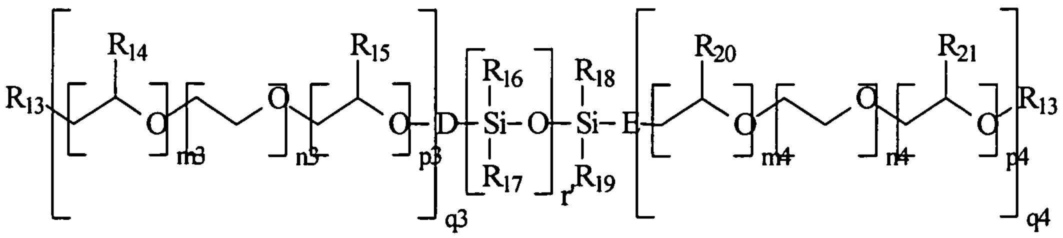

(III)

where:

- $m_3$, $p_3$, $m_4$ and $p_4$ represent a number of alkylene oxide units of less than or equal to 150,
- $n_3$ and $n_4$ represent a number of ethylene oxide units of less than or equal to 150,
- $q_3$ and $q_4$ represent a whole number at least equal to 1 and such that $0 \leq (m_3+n_3+p_3)q_3 \leq 150$ and $0 \leq (M_4+n_4+_{P4})q_4 \leq 150$,
- r' represents a number such that $1 \leq r' \leq 200$,
- $R_{13}$ represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again

to the group of ethylenically unsaturated amides or imides,
- $R_{14}$, $R_{15}$, $R_{20}$ and $R_{21}$ represent hydrogen or the methyl or ethyl radical,
- $R_{16}$, $R_{17}$, $R_{18}$ and $R_{19}$ represent linear or branched alkyl or aryl, or alkylaryl or arylalkyl groupings, having 1 to 20 carbon atoms, or their blends,
- D and E are groupings which may be present, which then represent a hydrocarbonated radical having 1 to 4 carbon atoms,

or a blend of several of these monomers,

**9.** Use according to one of the claims 1 to 8, **characterised in that** the said comb polymer consists, expressed by weight, of:

(a) between 2% and 95%, and more particularly between 5% and 90%, of at least one anionic monomer with ethylenic unsaturation and with a monocarboxylic function chosen from among the ethylenic unsaturation monomers and with a monocarboxylic function such as acrylic or methacrylic acid, or again the diacid hemiesters such as the $C_1$ to $C_4$ monoesters of maleic or itaconic acids, or their blends, or chosen from among the monomers with ethylenic unsaturation and with a dicarboxylic function such as crotonic, isocrotonic, cinnamic, itaconic, maleic acid, or again the anhydrides of carboxylic acids, such as maleic anhydride, or chosen from among the monomers with ethylenic unsaturation and with a sulphonic function such as acrylamido-methyl-propane-sulphonic acid, sodium methallylsulphonate, vinyl sulphonic acid and styrene sulphonic acid, or again chosen from among the monomers with ethylenic unsaturation and with a phosphoric function such as vinyl phosphoric acid, ethylene glycol methacrylate phosphate, propylene glycol methacrylate phosphate, ethylene glycol acrylate phosphate, propylene glycol acrylate phosphate and their ethoxylates, or again chosen from among the monomers with ethylenic unsaturation and with a phosphonic function such as vinyl phosphonic acid, or their blends, or their blends,
(b) between 2 and 95%, and yet more particularly between 5% and 90%, of a least one monomer with non-ionic ethylenic unsaturation of formula (I):

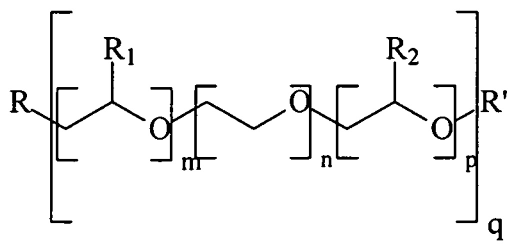

(I)

where:

- m and p represent a number of alkylene oxide units of less than or equal to 150,
- n represents a number of ethylene oxide units of less than or equal to 150,
- q represents a whole number at least equal to 1 and such that $5 \leq (m+n+p)q \leq 150$, and preferentially such that $15 \leq (m+n+p)q \leq 120$,
- $R_1$ represents hydrogen or the methyl or ethyl radical,
- $R_2$ represents hydrogen or the methyl or ethyl radical,
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides,
- R' represents a hydrocarbonated radical having 1 to 4 carbon atoms,

or a blend of several monomers of formula (I),
(c) between 0% and 50% of at least one monomer of the acrylamide or methacrylamide type, or their derivates

such as N-[3-(dimethylamino) propyl] acrylamide or N-[3-(dimethylamino) propyl] methacrylamide, and their blends, or again of at least one non-water soluble monomer such as the alkyl acrylates or methacrylates, the unsaturated esters such as N-[2-(dimethylamino) ethyl] methacrylate, or N-[2-(dimethylamino) ethyl] acrylate, the vinylics such as vinyl acetate, vinylpyrrolidone, styrene, alphamethylstyrene and their derivates, or at least one cationic monomer or quaternary ammonium such as [2-(methacryloyloxy) ethyl] trimethyl ammonium chloride or sulphate, [2-(acryloyloxy) ethyl] trimethyl ammonium chloride or sulphate, [3-(acrylamido) propyl] trimethyl ammonium chloride, dimethyl diallyl ammonium chloride or sulphate, [3-(methacrylamido) propyl] trimethyl ammonium chloride or sulphate, or again one organofluorate monomer, or indeed one organosililate monomer, preferentially chosen from among the molecules of formulae (IIa) or (IIb):

with formula (IIa)

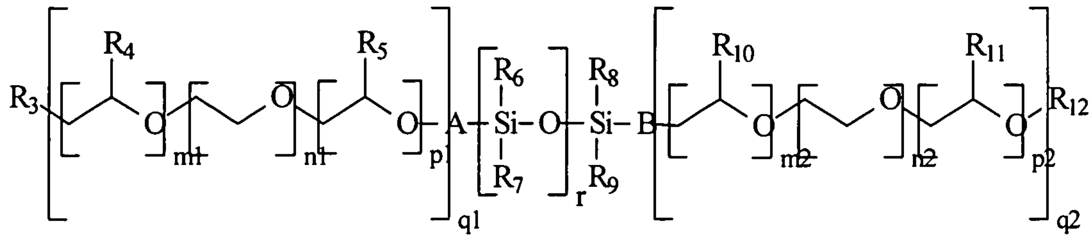

where:

- $m_1$, $p_1$, $m_2$ and $p_2$ represent a number of alkylene oxide units of less than or equal to 150,
- $n_1$ and $n_2$ represent a number of ethylene oxide units of less than or equal to 150,
- $q_1$ and $q_2$ represent a whole number at least equal to 1 and such that $0 \leq (m_1+n_1+p_1)q_1 \leq 150$ and $0 \leq (m_2+n_2+p_2)q_2 \leq 150$,
- r represents a number such that $1 \leq r \leq 200$,
- $R_3$ represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides,
- $R_4$, $R_5$, $R_{10}$ and $R_{11}$ represent hydrogen or the methyl or ethyl radical,
- $R_6$, $R_7$, $R_8$ and $R_9$ represent linear or branched alkyl or aryl, or alkylaryl or arylalkyl groupings, having 1 to 20 carbon atoms, or their blends,
- $R_{12}$ represents a hydrocarbonated radical having 1 to 40 carbon atoms,
- A and B are groupings which may be present, which then represent a hydrocarbonated radical having 1 to 4 carbon atoms,

with formula (IIb)

$$R\text{-}A\text{-}Si(OB)_3$$

where:

- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides,
- A is a grouping which may be present, which then represents a hydrocarbonated radical having 1 to 4 carbon atoms,
- B represents a hydrocarbonated radical having 1 to 4 carbon atoms,

or a blend of several of these monomers,
(d) 0% to 3% of at least one crosslinking monomer chosen from the group constituted by ethylene glycol dimethacrylate, trimethylolpropanetriacrylate, allyl acrylate, the allyl maleates, methylene-bis-acrylamide, methylene-bismethacrylamide, tetrallyloxyethane, the triallylcyanurates, the allyl ethers obtained from polyols such as pentaerythritol, sorbitol, sucrose or others, or chosen from among the molecules of formula (III):

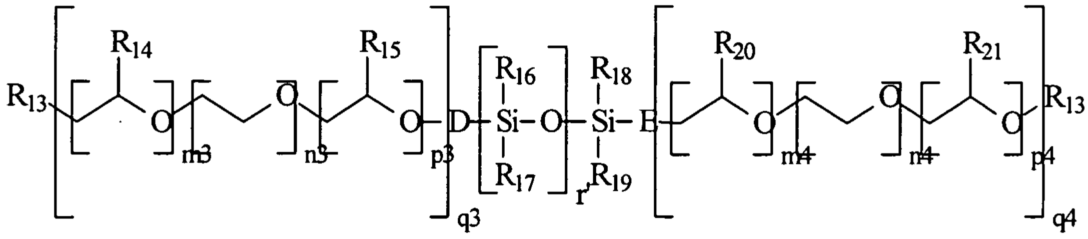

(III)

where:

- $m_3$, $p_3$, $m_4$ and $p_4$ represent a number of alkylene oxide units of less than or equal to 150,
- $n_3$ and $n_4$ represent a number of ethylene oxide units of less than or equal to 150,
- $q_3$ and $q_4$ represent a whole number at least equal to 1 and such that $0 \leq (m_3+n_3+p_3)q_3 \leq 150$ and $0 \leq (m_4+n_4+p_4)q_4 \leq 150$,
- r' represents a number such that $1 \leq r' \leq 200$,
- $R_{13}$ represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as acrylurethane, methacrylurethane, $\alpha$-$\alpha$' dimethyl-isopropenyl-benzylurethane, allylurethane, or to the group of allylic or vinylic ethers, whether or not substituted, or again to the group of ethylenically unsaturated amides or imides,
- $R_{14}$, $R_{15}$, $R_{20}$ and $R_{21}$ represent hydrogen or the methyl or ethyl radical,
- $R_{16}$, $R_{17}$, $R_{18}$ and $R_{19}$ represent linear or branched alkyl or aryl, or alkylaryl or arylalkyl groupings, having 1 to 20 carbon atoms, or their blends,
- D and E are groupings which may be present, which then represent a hydrocarbonated radical having 1 to 4 carbon atoms,

or a blend of several of these monomers,

where the total proportions of the constituents a), b), c) and d) is equal to 100%.

FIGURE 1

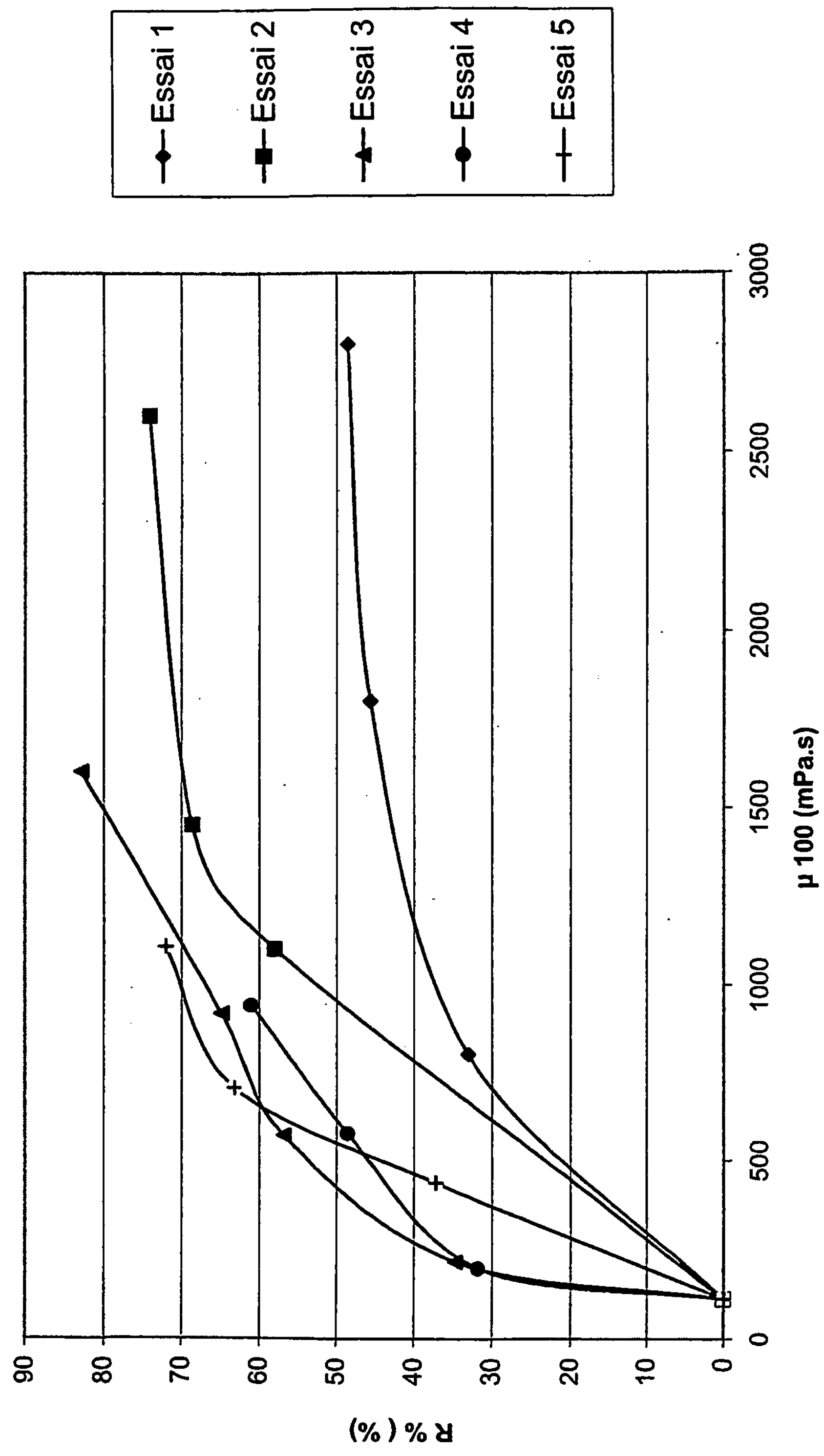
Essai 1
Essai 2
Essai 3
Essai 4
Essai 5
R % ( % )
0
10
20
30
40
50
60
70
80
90
µ 100 (mPa.s)
0
500
1000
1500
2000
2500
3000

FIGURE 2

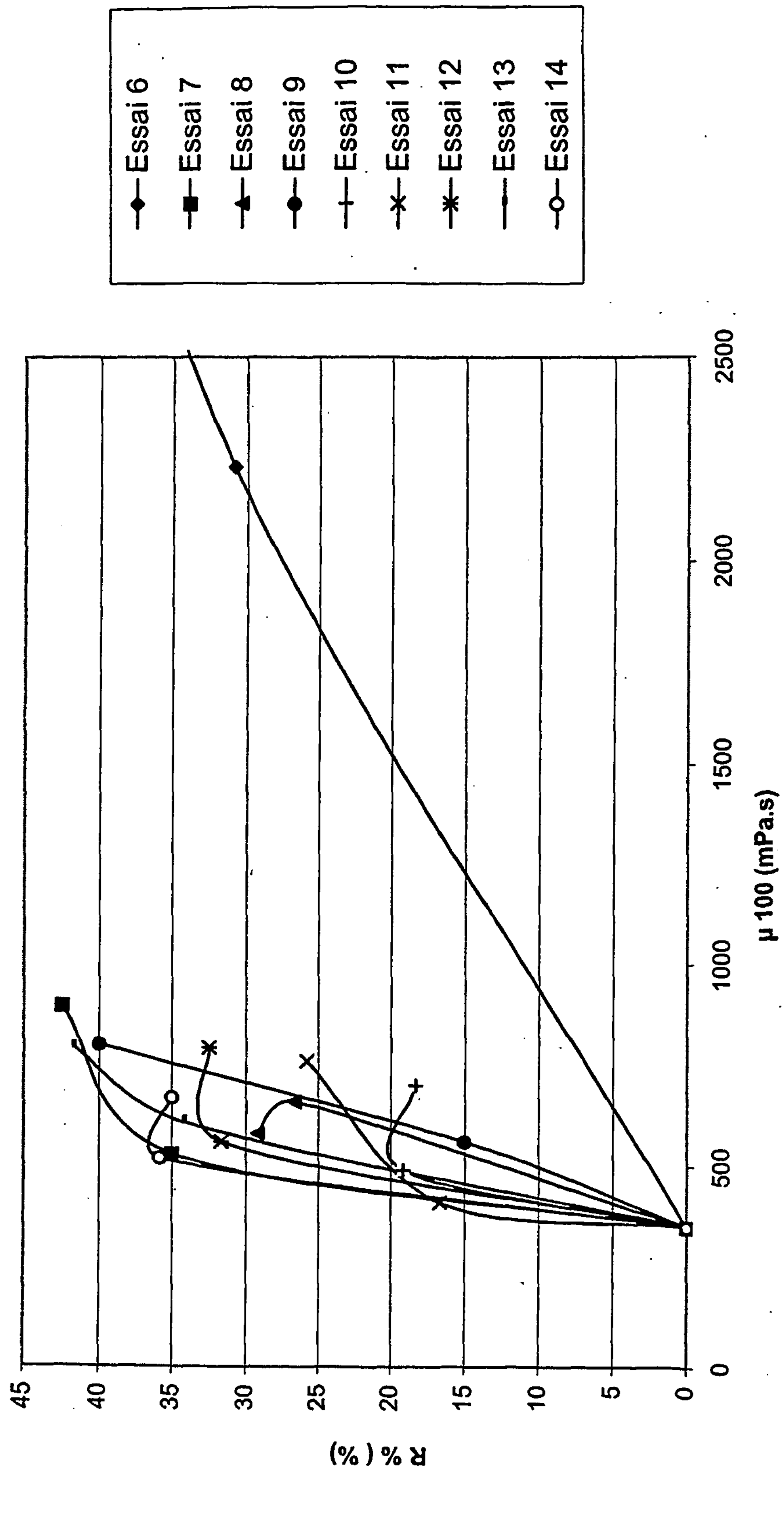
Essai 6
Essai 7
Essai 8
Essai 9
Essai 10
Essai 11
Essai 12
Essai 13
Essai 14
R % ( %)
µ 100 (mPa.s)
0
5
10
15
20
25
30
35
40
45
0
500
1000
1500
2000
2500

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0509878 A
- EP 1203121 A
- EP 0610534 A
- WO 00077058 A
- WO 2004041882 A
- WO 2004041883 A
- WO 2004044022 A